# EUROPÄISCHE PATENTSCHRIFT

(11) **EP 3 507 153 B1**
(45) Veröffentlichungstag und Bekanntmachung des Hinweises auf die Patenterteilung: **01.04.2020**
(21) Anmeldenummer: 17745254.7
(22) Anmeldetag: 10.07.2017
(51) Int. Cl.: B60T 13/68, B60T 13/66

(54) **ELEKTRONISCH STEUERBARES PNEUMATISCHES BREMSSYSTEM IN EINEM NUTZFAHRZEUG SOWIE VERFAHREN ZUM ELEKTRONISCHEN STEUERN EINES PNEUMATISCHEN BREMSSYSTEMS IN EINEM NUTZFAHRZEUG**
ELECTRONICALLY CONTROLLABLE PNEUMATIC BRAKE SYSTEM IN A UTILITY VEHICLE AND METHOD FOR ELECTRONICALLY CONTROLLING A PNEUMATIC BRAKE SYSTEM IN A UTILITY VEHICLE
SYSTÈME DE FREINAGE PNEUMATIQUE À COMMANDE ÉLECTRONIQUE DANS UN VÉHICULE UTILITAIRE, ET PROCÉDÉ DE COMMANDE ÉLECTRONIQUE D'UN SYSTÈME DE FREINAGE PNEUMATIQUE DANS UN VÉHICULE UTILITAIRE

(30) Priorität: 31.08.2016 DE 102016010460
(43) Veröffentlichungstag der Anmeldung: 10.07.2019
(73) Patentinhaber: WABCO Europe BVBA, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000813
(87) Internationale Veröffentlichungsnummer: WO 2018/041383

(56) Entgegenhaltungen:
- EP-A1- 2 998 177
- DE-A1-102007 014 423
- DE-A1-102008 015 249

## Beschreibung

Die Erfindung betrifft ein elektronisch steuerbares pneumatisches Bremssystem in einem Nutzfahrzeug sowie ein Verfahren zum elektronischen Steuern eines pneumatischen Bremssystems.

In Fahrzeugen, insbesondere Nutzfahrzeugen, mit einem pneumatischen Bremssystem können zum Aussteuern von Bremsdrücken von einer Steuereinrichtung (ECU) elektronisch Achsmodulatoren angesteuert werden. Die elektronische Ansteuerung findet dabei entweder in Abhängigkeit eines durch ein Fußbremsventil vorgegebenen Fahrerwunsches oder aber in Abhängigkeit einer automatisiert vorgegebenen Fahrzeug-Soll-Verzögerung statt. Die Achsmodulatoren erzeugen dann pneumatisch einen entsprechenden Bremsdruck, der an Bremszylinder der Betriebsbremsen des Bremssystems ausgesteuert werden.

Alternativ können die Achsmodulatoren auch pneumatisch angesteuert werden, indem vom Fußbremsventil ein dem Fahrerwunsch entsprechender Steuerdruck an die Achsmodulatoren vorgegeben wird, in Abhängigkeit dessen der jeweilige Achsmodulator den entsprechenden Bremsdruck für die Betriebsbremsen erzeugt. In beiden Varianten ist eine ABS-Funktionalität integriert, so dass ein Blockieren der Räder beim Bremsen verhindert werden kann.

Ergänzend kann in einem weiteren Parkbrems-Bremskreis eine pneumatische Parkbremse mit einem Parkbremsventil vorgesehen sein, die eine durch Betätigung des Parkbremsventils durch den Fahrer manuell vorgegebene Parkbremskraft umsetzt. Das Parkbremsventil steuert hierbei pneumatisch in Abhängigkeit der vorgegebenen Parkbremskraft über ein Steuerventil eine Federspeicherbremse an, die daraufhin das Fahrzeug im Stillstand hält. Die Parkbremse kann auch als elektropneumatische Parkbremse ausgeführt sein, so dass die Parkbremskraft auch automatisiert vorgegeben werden kann. Durch eine entsprechende elektrische Ansteuerung des Parkbremsventils kann die Parkbremse dann auch als Hilfsbremse insbesondere während des Betriebs des Nutzfahrzeuges verwendet werden, um zumindest eine unterstützende Bremsung zu bewirken. Darüber kann beispielsweise eine Hill-Holder-Funktion, eine Anfahrhilfe oder eine automatische Parkbremse realisiert werden.

Nachteilig bei bisherigen Umsetzungen einer automatisiert ansteuerbaren elektropneumatischen Parkbremse ist, dass für eine Umrüstung einer bereits im Fahrzeug vorhandenen pneumatischen Parkbremse auf eine elektropneumatische Parkbremse viele zusätzliche Komponenten nötig sind, die eine elektronische Ansteuerung dieser ermöglichen sollen. Dadurch sind die Kosten und der Montage-Aufwand bei einer Umrüstung sehr hoch. Aber auch bei einer Erstausstattung ist aufgrund der vielen Komponenten der Kostenaufwand erhöht.

In EP 2 066 536 B1 wird vorgeschlagen, in einem Anhänger mit einem elektronischen Bremssystem und einem Parkbremsventil zur manuellen Betätigung der Bremsanlage über eine Federspeicherbremse ein als bistabiles Stromstoßventil ausgeführtes Bypass-Ventil bereitzustellen. Das Bypass-Ventil wird beim Abstellen des Fahrzeuges derartig umgeschaltet, dass Federspeicherzylinder der Federspeicherbremse entlüftet werden und dadurch ein Bewegen des Anhängers verhindert wird. Dadurch soll erreicht werden, dass der Anhänger beim Abstellen nicht unberechtigt entfernt werden kann. Um auch im stromlosen Zustand die Schaltstellung des Bypass-Ventils beizubehalten, ist das Bypass-Ventil als bistabiles Stromstoßventil ausgeführt, d.h. zum Umschalten wird das Bypass-Ventil mit einem kurzen Strompuls angeregt; die dadurch eingelegte Schaltstellung wird auch unbestromt beibehalten. Nachteilig hierbei ist, dass das bistabile Stromstoßventil sehr kostenintensiv ist.

In EP 2 190 706 B1 ist eine Ventilanordnung zur Steuerung einer Bremsanlage eines Anhängerfahrzeuges beschrieben. Demnach ist vorgesehen, den Parkbrems-Bremsdruck in einer Federspeicherbremse über ein pneumatisch gesteuertes 3/2 Wegeventil einzustellen. Befindet sich das Fahrzeug im Betrieb, wird das 3/2-Wegeventil pneumatisch so umgeschaltet, dass ein Vorratsdruckmittel aus einem Druckmittelvorrat des Anhängers in die Federspeicherbremsen eingeleitet wird, d.h. in den Federspeicherzylindern wird ein hoher Parkbrems-Bremsdruck eingestellt, der die Federspeicherbremsen in der gelösten Stellung hält. Wird vom Fahrer eine Parking-Funktion aktiviert, wird das 3/2-Wegeventils derartig umgeschaltet, dass in der Federspeicherbremse ein durch die Betriebsbremsfunktion eingestellter Betriebsbrems-Bremsdruck als Parkbrems-Bremsdruck eingestellt wird. Betätigt der Fahrer die Betriebsbremse im Stillstand nicht, wird somit die Federspeicherbremse automatisch zugespannt. Bei einer Betätigung der Betriebsbremse, steigen der Betriebsbrems-Bremsdruck und somit auch der Parkbrems-Bremsdruck in der Federspeicherbremse, so dass die Federspeicherbremse wieder gelöst wird. Gleichzeitig wird allerdings der steigende Betriebsbrems-Bremsdruck den Betriebsbremszylindern zugeführt, so dass diese zugespannt werden und das Fahrzeug darüber im Stillstand gehalten wird. Nachteilig bei dieser Lösung ist, dass sehr viele zusätzliche Komponenten nötig sind, um eine vorhandene pneumatische Parkbremse umzurüsten, beispielsweise erfolgt die Betätigung des 3/2-Wegeventils pneumatisch, was den Nachrüstaufwand zusätzlich erhöht. Zudem ist manuell keine gestufte Vorgabe einer Parkbremskraft im Betrieb des Fahrzeuges möglich, wenn die Parking-Funktion nicht eingestellt ist.

In DE 35 06 418 C1 ist beschrieben, in einer Federspeicherfeststellbrems- und Betriebsbremseinrichtung für Anhänger eine vollautomatische Betätigung der Feststellbremse bzw. Federspeicherbremse im Anhänger durchzuführen, wenn auch die Federspeicherbremse im Zugfahrzeug aktiviert wird. Ergänzend wird auch beim Abkuppeln des Anhängers die Federspeicherbremse automatisch zugespannt. Dies erfolgt über eine elektrische Ansteuerung eines Anhängerbremsventils, das die Federspeicherzylinder der Federspeicherbremse entlüftet, sobald der Steuereingang des Anhängerbremsventils stromlos ist. Dies ist dann der Fall, wenn der Anhänger abgekuppelt ist oder vom Fahrer ein entsprechendes elektrisches Signal zum Bremsen vorgegeben wird, das elektrisch sowohl an ein Ventil der Federspeicherbremse des Zugfahrzeuges als auch an das Anhängerbremsventil des Anhängers übermittelt wird. Die Abbremsung über die beiden Federspeicherbremsen erfolgt in Abhängigkeit des Betätigungsgrades der Federspeicherbremse, so dass eine stufenlose Betätigung ermöglich wird. Eine rein pneumatische Ansteuerung des Anhängersteuerventils ist nicht vorgesehen.

EP 2 055 541 B1 beschreibt ein Fahrerassistenzsystem mit einem bistabilen und einem monostabilen Bypass-Ventil. Über das bistabile Bypass-Ventil kann ein Federspeicher einer Feststellbremse belüftet oder entlüftet werden, indem bei entsprechender Schaltstellung des bistabilen Bypass-Ventils entweder der Druckmittelvorrat zum Lösen des Federspeichers oder eine Entlüftung zum Zuspannen des Federspeichers mit einem pneumatischen Steuereingang eines Achsmodulators verbunden werden. Zwischen dem bistabilen Bypass-Ventil und dem Achsmodulator ist das monostabile Bypass-Ventil angeordnet, das in einer Schaltstellung den vom bistabilen Bypass-Ventil ausgegebenen Steuerdruck an den Achsmodulator durchlässt und sonst eine Strömungsverbindung verhindert. D.h. in der zweiten Schaltstellung des monostabilen Bypass-Ventils wird der vorherrschende Steuerdruck am Achsmodulator gehalten.

Die DE 10 2008 015 249 A1 beschreibt eine druckmittelbetätigte Bremsanlage eines Fahrzeugs mit wenigstens einem bistabilen Schieberventil, das so ausgeführt ist, dass ein Ventilschieber bei einer Störung in der elektronischen Steuerung seine zuletzt eingenommene Stellung stabil aufrecht erhält.

Die DE 10 2007 014 423 A1 beschreibt eine Feststellbremsanlage für Nutzfahrzeuge und Betriebsverfahren für eine Feststellbremsanlage.

Es ist Aufgabe der Erfindung, ein elektronisch steuerbares pneumatisches Bremssystem in einem Nutzfahrzeug bereitzustellen, mit dem mit wenig Aufwand eine sichere und zuverlässige elektronische Ansteuerung einer pneumatischen Parkbremse gewährleistet werden kann. Weiterhin ist Aufgabe der Erfindung, ein Verfahren zum elektronischen Steuern eines derartigen Bremssystems in einem Nutzfahrzeug anzugeben.

Diese Aufgabe wird durch ein elektronisch steuerbares pneumatisches Bremssystem nach Anspruch 1 und ein Verfahren nach Anspruch 16 gelöst. Bevorzugte Weiterbildungen sind in den Unteransprüchen angegeben.

Erfindungsgemäß wird demnach erkannt, dass zum elektronischen Ansteuern einer pneumatischen Parkbremse in einem Fahrzeug, insbesondere Nutzfahrzeug, lediglich ein monostabiles Bypass-Ventil mit zwei Schaltstellungen, beispielsweise ein 3/2-Wegeventil, sowie eine Parkbrems-Steuereinrichtung nötig sind, die in Kombination dafür sorgen, dass Federspeicherbremsen mit Federspeicherzylindern, die Teil der pneumatischen Parkbremse sind, entweder über ein Parkbremsventil in Abhängigkeit einer vom Fahrer manuell vorgegebenen Parkbremskraft betätigt werden oder aber in Abhängigkeit einer von der Parkbrems-Steuereinrichtung über ein Parkbrems-Signal elektrisch vorgegebenen Parkbremskraft.

Erfindungsgemäß ist das Bypass-Ventil monostabil, d.h. lediglich eine erste Schaltstellung des Bypass-Ventils ist stabil, wobei in der ersten Schaltstellung die Federspeicherbremsen bzw. Federspeicherzylinder in Abhängigkeit der manuell vorgegebenen Parkbremskraft betätigt werden. Unter stabil wird hierbei verstanden, dass ohne eine elektrische Ansteuerung des monostabilen Bypass-Ventils, d.h. im unbestromten Fall, automatisch die stabile erste Schaltstellung eingestellt wird.

Im Rahmen der Erfindung wird hierbei bei einem vollständig betätigten Parkbremsventil das Fahrzeug im Stillstand gehalten, d.h. die Federspeicherzylinder der Federspeicherbremse sind vollständig zugespannt. Bei einem vollständig unbetätigten Parkbremsventil ist das Fahrzeug ungebremst, d.h. die Federspeicherzylinder der Federspeicherbremsen sind vollständig gelöst. Zwischen der vollständig betätigten und der vollständig unbetätigten Stellung können vom Fahrer manuell beliebige Zwischenstellungen eingestellt und somit eine variable Parkbremskraft vorgegeben werden.

In der ersten Schaltstellung des erfindungsgemäßen monostabilen Bypass-Ventils, die die stabile Schaltstellung darstellt, wird ein von dem Parkbremsventil vorgegebener Betätigungsdruck, der in Abhängigkeit einer manuellen Betätigung durch den Fahrer, erzeugt wird, als Parkbrems-Steuerdruck vorzugsweise an einen pneumatischen Steuereingang eines Parkbrems-Relaisventils geleitet. Das Parkbrems-Relaisventil verstärkt diesen Parkbrems-Steuerdruck und gibt daraufhin einen luftmengenverstärkten Relaisventil-Druck aus, der als Parkbrems-Bremsdruck an die Federspeicherzylinder der Federspeicherbremse geleitet wird. Ist der Parkbrems-Bremsdruck kleiner als ein Öffnungsdruck der Federspeicherbremse, gehen die Federspeicherbremsen in die zugespannte bzw. geschlossene Stellung über, so dass eine Bremsung bewirkt wird oder das Fahrzeug im Stillstand gehalten wird. Ist der Parkbrems-Bremsdruck größer als der Öffnungsdruck, wird die Federspeicherbremse gelöst. In dieser Weise wird in dieser ersten Schaltstellung des monostabilen Bypass-Ventils die vom Fahrer vorgegebene Parkbremskraft von den Federspeicherbremsen umgesetzt.

Das monostabile Bypass-Ventil kann hierbei entweder zwischen dem Parkbremsventil und dem Parkbrems-Relaisventil angeordnet sein und damit dafür sorgen, dass der Betätigungsdruck als Parkbrems-Steuerdruck an den pneumatischen Steuereingang des Parkbrems-Relaisventils geleitet wird, oder aber zwischen dem Parkbrems-Relaisventil und den Federspeicherzylindern, so dass das monostabile Bypass-Ventil dafür sorgt, dass der luftmengenverstärkte Relaisventil-Druck als Parkbrems-Bremsdruck an die Federspeicherzylinder ausgegeben wird.

Grundsätzlich kann das zwischengeschaltete Parkbrems-Relaisventil, das lediglich zur Luftmengenverstärkung dient, aber auch entfallen. D.h. der Betätigungsdruck wird in der ersten Schaltstellung des monostabilen Bypass-Ventils direkt als Parkbrems-Bremsdruck an die Federspeicherzylinder der Federspeicherbremse geleitet.

In der nicht-stabilen, zweiten Schaltstellung des monostabilen Bypass-Ventils, die nur dann eingestellt ist, wenn ein Bypass-Signal am monostabilen Bypass-Ventil anliegt, d.h. das monostabile Bypass-Ventil bestromt wird, wird nur ein geringer Parkbrems-Bremsdruck an die Federspeicherzylinder ausgesteuert. Die Federspeicherbremsen gehen also in die vollständig geschlossene Stellung über. D.h. in der zweiten Schaltstellung des monostabilen Bypass-Ventils wird eine maximale Bremsung durch die Federspeicherbremsen bewirkt.

Ist das monostabile Bypass-Ventil zwischen dem Parkbremsventil und dem Parkbrems-Relaisventil angeordnet, sorgt es in der zweiten Schaltstellung dafür, dass der pneumatische Steuereingang des Parkbrems-Relaisventils mit einem Bypass-Entlüftungsanschluss verbunden wird, so dass der pneumatische Steuereingang entlüftet wird. Ist das monostabile Bypass-Ventil allerdings zwischen dem Parkbrems-Relaisventil und den Federspeicherzylindern angeordnet, so werden diese in der zweiten Schaltstellung mit dem Bypass-Entlüftungsanschluss verbunden. In beiden Fällen wird in der zweiten Schaltstellung ein minimaler Parkbrems-Bremsdruck erzeugt, der für ein Zuspannen der Federspeicherzylinder sorgt.

Die zweite Schaltstellung wird dann eingestellt, wenn von der Parkbrems-Steuereinrichtung im Betrieb des Fahrzeuges automatisiert eine Parkbremskraft angefordert wird, beispielsweise im Rahmen einer Komfortfunktion, beispielsweise einer Hill-Holder-Funktion oder einer Berg-Anfahrhilfe, oder von einer Assistenz-Steuereinrichtung zum automatisierten Bremsen des Fahrzeuges, z.B. eine automatisierte Parkbrems-Funktion oder auch eine Hilfsbremsfunktion. Weiterhin kann auch eine automatisierte Anforderung einer Parkbremskraft durch Einstellen der zweiten Schaltstellung vorgesehen sein, wenn ein Ausfall in der elektrischen Ansteuerung der Betriebsbremsen des Fahrzeuges, insbesondere eines automatisiert gesteuerten Fahrzeuges, vorliegt, d.h. in einem Redundanzfall.

Somit wird vorteilhafterweise erkannt, dass bei einer elektronischen Ansteuerung der pneumatischen Parkbremse eine abgestufte Bremsung nicht zwingend nötig ist. Vielmehr ist beispielsweise zum Halten des Fahrzeuges im Stillstand in einer der Komfortfunktionen oder bei einer Hilfsbremsung oder im Redundanzfall bei einem Ausfall der automatisierten elektrischen Ansteuerung ein vollständiges Schließen der Federspeicherbremsen ausreichend. Daher kann in einer einfachsten Ausführungsform das elektrische Vorgeben einer abgestuften Parkbremskraft entfallen und dadurch Kosten gespart werden.

Vorteilhafterweise kann durch den erfindungsgemäßen Aufbau die manuelle Betätigung der Parkbremse erhalten bleiben, ohne dafür zusätzliche Bauteile, wie z.B. ein Select-High-Ventil oder eine pneumatische Selbsthaltung, zu verwenden.

Vergisst der Fahrer in Folge einer der Komfortfunktionen ein manuelles Aktivieren der Parkbremse beim dauerhaften Abstellen oder Parken des Fahrzeuges oder ist im Redundanzfall oder in einer Notsituation aus Sicherheitsgründen ein dauerhaftes Abstellen des Fahrzeuges gezwungenermaßen nötig, wird das monostabile Bypass-Ventil zunächst dauerhaft bestromt, so dass die Federspeicherzylinder dauerhaft zugespannt bleiben. Kann eine ausreichende Bestromung des monostabilen Bypass-Ventils und somit ein sicheres dauerhaftes Abstellen des Fahrzeuges nicht mehr sichergestellt werden, greift vorteilhafterweise eine Entlüftungsfunktion ein. Unter dauerhaftem Abstellen des Fahrzeuges wird hierbei verstanden, dass der Fahrer nicht beabsichtigt, das Fahrzeug fortzubewegen und dazu beispielsweise die Zündung ausstellt und das Fahrzeug ggf. auch verlässt.

Die Entlüftungsfunktion bewirkt, dass beim dauerhaften gewollten oder gezwungenen Abstellen oder beim Parken des Fahrzeuges auch ohne eine manuelle Vorgabe zum Zuspannen der Federspeicherbremsen über das Parkbremsventil und während sich das monostabile Bypass-Ventil in der unbestromten und stabilen ersten Schaltstellung befindet das Fahrzeug über die Federspeicherbremse im Stillstand gehalten werden kann. Die Entlüftungsfunktion wird dadurch ausgebildet, dass bei Erkennen eines dauerhaften - gewollten oder gezwungenen - Abstellens oder Parkens des Fahrzeuges und einem gleichzeitig unbetätigten Parkbremsventil eine Zufuhr eines Vorratsdruckmittels in einen der pneumatischen Parkbremse zugeordneten Parkbrems-Bremskreis unterbunden bzw. eingeschränkt wird. Gemäß einer speziellen Ausbildung wird dies folgendermaßen umgesetzt:
Demnach wird über eine Druckmittelvorrat-Befüllungseinrichtung ein Befüllen eines Parkbrems-Druckmittelvorrats mit dem Vorratsdruckmittel für den Parkbrems-Bremskreis, in dem die pneumatische Parkbremse betrieben wird, verhindert, wenn der Fahrer die Parkbremse bei einem dauerhaften - gewollten oder gezwungenen - Abstellen des Fahrzeuges manuell nicht betätigt hat. Das dauerhafte - gewollte oder gezwungene - Abstellen des Fahrzeuges wird hierbei beispielsweise dadurch erkannt, dass von einer Motor-Steuereinrichtung ein Abschalt-Signal ausgegeben wird, das angibt, ob die Zündung betätigt wurde bzw. ob der Motor läuft. Alternativ kann ein gezwungenes Abstellen des Fahrzeuges durch die Parkbrems-Steuereinrichtung - beispielsweise im Redundanzfall oder in einer Notsituation - selbst bewirkt werden, indem über eine Wegfahrsperre der Motor abgewürgt wird. Gleichzeitig wird über einen Druckschalter erkannt, ob durch eine manuelle Fahrerbetätigung ein Parkbrems-Steuerdruck vorgegeben wird und der Fahrer das Parkbremsventil betätigt.

Liegt keine Fahrerbetätigung der Parkbremse vor und gilt das Fahrzeug als abgestellt bzw. läuft der Motor nicht, wird im Rahmen der Entlüftungsfunktion das monostabile Bypass-Ventil in die erste Schaltstellung gebracht-falls die erste Schaltstellung nicht bereits eingestellt ist - und dadurch Vorratsdruckmittel aus dem Parkbrems-Druckmittelvorrat entnommen, um einen der Betätigung des Parkbremsventils entsprechenden Betätigungsdruck bzw. Parkbrems-Steuerdruck sowie einen dementsprechenden Parkbrems-Bremsdruck aufzubauen. Ein im Parkbrems-Druckmittelvorrat vorherrschender Vorratsdruck wird dadurch reduziert, gleichzeitig wird ein Nachfüllen von Vorratsdruckmittel in den Parkbrems-Druckmittelvorrat verhindert, da der Druckmittelvorrat-Befüllungseinrichtung durch den abgestellten Motor keine Energie mehr zugeführt wird und somit kein neues Vorratsdruckmittel in den Parkbrems-Druckmittelvorrat pumpen kann.

Bevor der Parkbrems-Bremsdruck den Öffnungsdruck übersteigt, wird das monostabile Bypass-Ventil im Rahmen der Entlüftungsfunktion in die zweite Schaltstellung gebracht. Dadurch wird verhindert, dass die Federspeicherbremsen gelöst werden, falls diese bereits angezogen sind. Andernfalls werden die Federspeicherbremsen zugespannt. Durch das Einstellen der zweiten Schalstellung und das Entlüften sinken der Parkbrems-Steuerdruck sowie der Parkbrems-Bremsdruck, da Druckmittel aus dem Parkbrems-Bremskreis abgelassen wird. Durch dieses Ablassen steht das Druckmittel für eine darauffolgende Betätigung nicht mehr zur Verfügung.

Der Parkbrems-Druckmittelvorrat kann also durch ein einmaliges oder mehrmaliges Umschalten des monostabilen Bypass-Ventils entleert werden. Dieses Umschalten wird sooft durchgeführt, bis ein im Parkbrems-Druckmittelvorrat vorherrschender Vorratsdruck unter dem Öffnungsdruck der Federspeicherzylinder liegt. Die Zufuhr von Vorratsdruckmittel aus dem Parkbrems-Druckmittelvorrat ist somit eingeschränkt, d.h. ab diesem Zeitpunkt kann die Federspeicherbremse nicht mehr so stark beaufschlagt werden, dass diese in die geöffnete Stellung übergeht. Das Fahrzeug wird somit unabhängig von der Betätigung des Parkbremsventils und ohne elektrische Ansteuerung des monostabilen Bypass-Ventils im Stillstand gehalten.

Erst wenn der Fahrer die Zündung wieder betätigt und den Motor startet, wird der Parkbrems-Druckmittelvorrat wieder über die Druckmittelvorrat-Befüllungseinrichtung befüllt und das Fahrzeug kann fortbewegt werden. Somit wird vorteilhafterweise erreicht, dass selbst bei einem unbetätigten Parkbremsventil nicht genügend Druckmittel im Parkbrems-Bremskreis vorhanden ist, um einen Parkbrems-Bremsdruck aufzubauen, der oberhalb des Öffnungsdruckes liegt und daher die Federspeicherbremse über die Federspeicherzylinder in die gelöste Stellung überführt. Dieses Verhindern bzw. Beschränken der Druckmittelzufuhr erfordert vorteilhafterweise lediglich eine angepasste Software-Steuerung beispielsweise auf der Parkbrems-Steuereinrichtung sowie lediglich im Fahrzeug bereits vorhandene Komponenten, wodurch die Kosten insgesamt gering gehalten werden können.

Somit wird vorteilhafterweise mit wenig Aufwand sichergestellt, dass das Fahrzeug im Stillstand gehalten werden kann, wenn der Fahrer beispielsweise vergisst, beim Abstellen oder beim Parken des Fahrzeuges das Parkbremsventil manuell zu betätigen. Vorteilhafterweise wird dabei erkannt, dass es für die Entlüftungsfunktion lediglich darauf ankommt, dass das Fahrzeug sicher in einem abgebremsten Zustand gehalten wird. Demnach können Komponenten, die für das Halten das Fahrzeuges im Stillstand nicht zwingend erforderlich sind, entfallen. Somit sind vorteilhafterweise keine kostenintensiven Ventile - beispielsweise bistabile Ventile - nötig, die beim Abstellen oder beim Parken des Fahrzeuges das monostabile Bypass-Ventil in einer zweiten Schaltstellung halten, in der die Federspeicherbremsen durch ein Entlüften der Federspeicherzylinder automatisch zugespannt werden.

Gemäß einer vorteilhaften Weiterbildung kann mit dem erfindungsgemäßen Aufbau über die Parkbrems-Steuereinrichtung auch elektrisch eine vereinfachte abgestufte Regelung des Parkbrems-Bremsdruckes erfolgen. Dazu kann das monostabile Bypass-Ventil beispielsweise gepulst angesteuert werden, d.h. es findet abwechselnd ein Bestromen und Nicht-Bestromen über das Bypass-Signal statt. Dadurch wird der Parkbrems-Steuerdruck abwechselnd zwischen dem Betätigungsdruck und dem Entlüftungsdruck umgeschaltet. Je nach gewählten Zeiten für das Bestromen und das Nicht-Bestromen in diesem Umschaltvorgang wird vom monostabilen Bypass-Ventil ein Parkbrems-Steuerdruck bzw. Parkbrems-Bremsdruck vorgegeben, der einer Mischung aus dem Betätigungsdruck bzw. dem Relaisventil-Druck und dem Entlüftungsdruck entspricht. Somit kann durch eine entsprechende Einstellung der Zeiten ein abgestufter Parkbrems-Bremsdruck vorgegeben werden, der die Federspeicherbremsen in eine Betätigungsstellung bringt, die zwischen einer vollständig zugespannten Betätigungsstellung und einer der Fahrervorgabe entsprechenden Betätigungsstellung liegt. Bei Einlegen der Parkbremse während der Fahrt kann damit bei geeigneter Wahl der bestromten und nicht-bestromten Phasen auch eine Stotterbremsfunktion ausgebildet werden, durch die ein dauerhaftes Blockieren der Räder vermieden werden kann.

Die Stotterbremsfunktion kann vorteilhafterweise dadurch erreicht werden, dass sichergestellt wird, dass beim abwechselnden Umschalten ein Wiederanlaufen eines zum Blockieren neigenden Rades erfolgen kann. Dies ist beispielsweise dann der Fall, wenn der Parkbrems-Bremsdruck bzw. der Parkbrems-Steuerdruck zumindest für eine Grenz-Zeit von beispielsweise 0,25s wiederkehrend über einen Grenz-Druck von beispielsweise 6,5bar ansteigt. In diesem Fall ist sichergestellt, dass sich ein zum Blockieren neigendes Rad wieder drehen kann.

Gemäß einer vorteilhaften Weiterbildung ist zum Ausbilden einer Sicherheitsfunktion ein zusätzliches Sicherheitsventil vorgesehen. Das Sicherheitsventil ist zwischen dem Bypass-Entlüftungsanschluss und dem monostabilen Bypass-Ventil vorgesehen. Das Umschalten des Sicherheitsventils erfolgt immer gleichzeitig mit dem Umschalten des monostabilen Bypass-Ventils. D.h. erst dann wenn beide Ventile umgeschaltet sind, wird der Entlüftungsdruck als Parkbrems-Steuerdruck an den pneumatischen Steuereingang des Parkbrems-Steuerventils bzw. an die Federspeicherzylinder geleitet. Darüber kann dafür gesorgt werden, dass das Fahrzeug über die Federspeicherzylinder tatsächlich nur dann abgebremst oder im Stillstand gehalten wird, wenn bei einem Umschalten des monostabilen Bypass-Ventils in die zweite Schaltstellung auch das Sicherheitsventil umgeschaltet wird.

Dadurch kann vorteilhafterweise sichergestellt werden, dass bei einem fehlerhaften und somit ungewollten Ansteuern des monostabilen Bypass-Ventils die Federspeicherbremse nicht zugespannt wird. Erst wenn gleichzeitig auch das Sicherheitsventil umschaltet, kann die Federspeicherbremse über den entsprechend niedrigen Parkbrems-Steuerdruck bzw. niedrigen Parkbrems-Bremsdruck zugspannt werden.

Bei einem Ausfall der Parkbrems-Steuereinrichtung oder der Ansteuerung des monostabilen Bypass-Ventils kann vorgesehen sein, den Fahrer aufzufordern, die Parkbremse manuell einzulegen oder andere Sicherheitsmaßnahme durchzuführen, um das Fahrzeug sicher im Stillstand zu halten. Zudem kann von der Parkbrems-Steuereinrichtung auch ein Abbremsen über die weiteren Radbremsen bzw. Betriebsbremsen im Fahrzeug angefordert werden. Alternativ kann auch die Betriebsbrems-Steuereinrichtung die Funktion der Parkbrems-Steuereinrichtung übernehmen, wenn die Parkbrems-Steuereinrichtung und/oder die Ansteuerung des monostabilen Bypass-Ventils ausgefallen ist.

Dadurch kann ein Betrieb der Parkbremse sicherer gestaltet werden. Um Ausfällen in der Energieversorgung vorzubeugen, kann eine zusätzliche Energiequelle für die Parkbrems-Steuereinrichtung vorgesehen sein, so dass über den Parkbrems-Bremskreis auch bei einem Ausfall der anderen Bremskreise im Fahrzeug zumindest hilfsweise noch bremsend eingegriffen werden kann. Die zusätzliche Energieversorgung kann insbesondere ein Generator, beispielsweise eine Lichtmaschine, und/oder ein Kurzzeitspeicher und/oder ein Hochvoltspeicher und/oder eine zweite Energiequelle sein, die jeweils unabhängig von einer ersten Energiequelle, die im Normalbetrieb für eine elektrische Versorgung des Bremssystems sorgen, funktionieren.

Die Erfindung wird im Folgenden anhand der beiliegenden Zeichnung erläutert. Es zeigen:
- Fig. 1a, 1b: ein erfindungsgemäßes elektropneumatisches Bremssystem mit einem Bypass-Ventil in zwei unterschiedlichen Ausführungsformen als Blockschaltbild;
- Fig. 2: eine spezielle Ausführungsform einer erfindungsgemäßen Entlüftungsfunktion des Bremssystems;
- Fig. 3: eine weitere Ausführungsform des Bremssystems mit einer Sicherheitsfunktion;
- Fig. 4a-d: Varianten zur Energieversorgung des elektropneumatisch gesteuerten Bremssystems gemäß Fig. 1; und
- Fig. 5: ein Flussdiagramm zur Durchführung des Verfahrens.

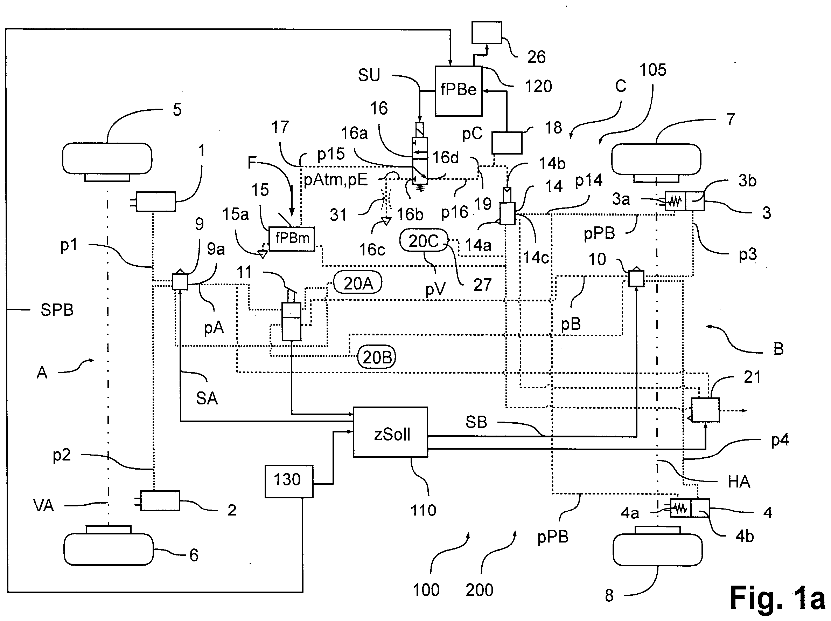

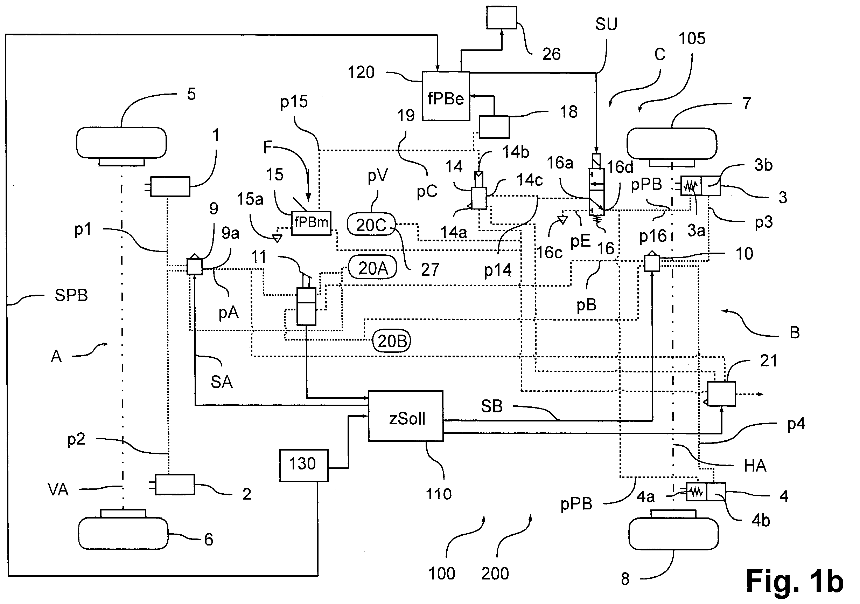

In den Ausführungsformen gemäß Fig. 1a und 1b ist ein Ausschnitt aus einem elektropneumatischen Bremssystem 100 eines Fahrzeuges 200, insbesondere Nutzfahrzeuges, als Blockschaltbild dargestellt, wobei das elektropneumatische Bremssystem als EBS-Bremssystem 100 ausgeführt ist, d.h. eine Bremsvorgabe erfolgt im Normalbetrieb elektrisch. Das EBS-Bremssystem 100 weist dazu vier Radbremsen 1, 2, 3, 4 auf, die dazu dienen, die Räder 5, 6, 7, 8 des Fahrzeuges 200 abzubremsen. Zum Abbremsen sind drei Bremskreise A, B, C vorgesehen, denen jeweils ein Druckmittelvorrat 20A, 20B, 20C zugeordnet ist, um die jeweiligen Bremskreise A, B, C mit einem Vorratsdruckmittel 27 zu versorgen und somit den Aufbau eines Bremsdruckes p1, p2, p3, p4, pPB für die jeweiligen Radbremsen 1, 2, 3, 4 zu ermöglichen.

In einem ersten Betriebsbrems-Bremskreis A sind die Radbremsen 1, 2 an den Rädern 5, 6 einer Vorderachse VA angeordnet, wobei die Radbremsen 1, 2 als Betriebsbremsen ausgeführt sind. Die Radbremsen 3, 4 an einer Hinterachse HA sind mit kombinierten Federspeicherzylindern 3a, 4a und Betriebsbremszylindern 3b, 4b ausgeführt, so dass die Räder 7, 8 der Hinterachse HA zum einen über einen zweiten Betriebsbrems-Bremskreis B mit einer Betriebsbremsfunktion und zusätzlich auch über einen Parkbrems-Bremskreis C mit einer Parkbremsfunktion abgebremst werden können. Die Radbremsen 3, 4 an der Hinterachse HA weisen somit sowohl Federspeicherzylinder 3a, 4a als auch Betriebsbremszylinder 3b, 4b auf, die unabhängig voneinander mit einem Parkbrems-Bremsdruck pPB bzw. einem Betriebsbrems-Bremsdruck p3, p4 versorgt werden. Durch den Parkbrems-Bremskreis C kann somit eine pneumatische Parkbremse 105 im Fahrzeug 200 ausgebildet werden.

In den beiden Betriebsbrems-Bremskreisen A, B werden die Betriebsbrems-Bremsdrücke p1, p2, p3, p4 im Normalbetrieb über elektrisch gesteuerte Achsmodulatoren 9, 10 erzeugt, indem von einer Betriebsbrems-Steuereinrichtung 110 (ECU) Steuersignale SA, SB an die Achsmodulatoren 9, 10 elektrisch übermittelt werden, die dann das Vorratsdruckmittel 27 aus dem entsprechenden Druckmittelvorrat 20A, 20B mit einem bestimmten Betriebsbrems-Bremsdruck p1, p2, p3, p4 aussteuern. Die Höhe der Betriebsbrems-Bremsdrücke p1, p2, p3, p4 ergibt sich insbesondere aus einer angeforderten Fahrzeug-Soll-Verzögerung zSoll, die gemäß diesem Ausführungsbeispiel aus einer vom Fahrer über ein Fußbremsventil 11 manuell vorgegebenen Anforderung oder von einer Assistenz-Steuereinrichtung 130 (ADAS-ECU, (A)dvanced-(D)river-(AS)sistance), die zur automatisierten Steuerung des Fahrzeuges 200 vorgesehen ist, folgt.

Auf einen ABS-Bremsschlupffall an den Rädern 5, 6, 7, 8 beiden Fahrzeugachsen VA, HA kann durch entsprechende elektrische Ansteuerung des jeweiligen Achsmodulators 9, 10 reagiert werden.

Bei einem Ausfall oder einem Defekt in der elektronischen Ansteuerung der beiden Achsmodulatoren 9, 10 kann auf eine pneumatische Rückfallebene gewechselt werden, indem bei einer Betätigung des Fußbremsventils 11 durch den Fahrer ein pneumatischer Betriebsbrems-Steuerdruck pA, pB an den jeweiligen Achsmodulator 9, 10 ausgesteuert wird. Der jeweilige Achsmodulator 9, 10 verstärkt dann den Betriebsbrems-Steuerdruck pA, pB entsprechend und gibt diesen als Betriebsbrems-Bremsdruck p1, p2, p3, p4 an den entsprechenden Betriebsbrems-Bremskreis A, B aus. Somit kann von einer elektronischen Ansteuerung der Achsmodulatoren 9, 10 im Redundanzfall auf eine pneumatische Ansteuerung gewechselt werden.

Im Parkbrems-Bremskreis C ist ein Parkbrems-Relaisventil 14 mit einem pneumatischen Steuereingang 14b vorgesehen. Das Parkbrems-Relaisventil 14 wird pneumatisch über einen Parkbrems-Steuerdruck pC angesteuert, den das Parkbrems-Relaisventil 14 in gewohnter Weise luftmengenverstärkt und daraufhin einen luftmengenverstärkten Relaisventil-Druck p14 als Parkbrems-Bremsdruck pPB an die Federspeicherzylinder 3a, 4a der Radbremsen 3, 4 der Hinterachse HA ausgibt. Die Federspeicherzylinder 3a, 4a funktionieren hierbei derartig, dass diese bei einem Parkbrems-Bremsdruck pPB, der kleiner als ein Öffnungsdruck pO von beispielsweise 6,1bar ist, in eine geschlossene bzw. zugespannte Betätigungsstellung umschalten und bei einem Parkbrems-Bremsdruck pPB, der größer ist als der Öffnungsdruck pO, in eine geöffnete bzw. gelöste Betätigungsstellung übergehen.

Der Parkbrems-Steuerdruck pC kann in Abhängigkeit einer manuellen Betätigung eines Parkbremsventils 15 durch den Fahrer, der eine manuelle Parkbremskraft fPBm vorgibt, oder aber in Abhängigkeit einer elektrischen Parkbremsvorgabe in Form eines Parkbrems-Signals SPB von einer Parkbrems-Steuereinrichtung 120, die eine elektrische Parkbremskraft fPBe vorgibt, erzeugt werden. Der Parkbrems-Steuereinrichtung 120 wird das Parkbrems-Signal SPB elektrisch von der Assistenz-Steuereinrichtung 130 übergeben, die automatisiert über die Parkbrems-Steuereinrichtung 120 eine Betätigung der pneumatischen Parkbremse 105 mit der elektrischen Parkbremskraft fPBe anfordern kann. Alternativ kann im Redundanzfall, d.h. wenn beispielsweise die Assistenz-Steuereinrichtung 130 oder die Betriebsbrems-Steuereinrichtung 110 ausgefallen oder defekt sind, auch von der Parkbrems-Steuereinrichtung 120 eine elektrische Parkbremskraft fPBe vorgegeben werden, um auf den Redundanzfall zu reagieren.

Dadurch kann zum einen eine manuelle Parkbremsfunktion umgesetzt werden, wenn der Fahrer das Fahrzeug 200 beispielsweise abstellen möchte und dazu das Parkbremsventil 15 betätigt, oder aber in einem Bus eine Haltestellenfunktion aktiviert und dadurch eine manuelle Parkbremskraft fPBm vorgibt. Bei einer automatisierten Aktivierung über die Parkbrems-Steuereinrichtung 120 hingegen kann beispielsweise eine von der Assistenz-Steuereinrichtung 130 angeforderte Hilfsbremsung oder eine automatisiert angeforderte Parkbremsung oder eine von der Parkbrems-Steuereinrichtung 120 angeforderte Komfortfunktion umgesetzt werden, wenn bestimmte Auslösekriterien erfüllt sind. Weiterhin kann auf einen Redundanzfall reagiert werden. Demnach kann eine automatisierte Aktivierung durch Vorgabe einer elektrischen Parkbremskraft fPBe beispielsweise dann erfolgen, wenn das Fahrzeug 200 im Betrieb über einen Zeitraum von beispielsweise 5s stillsteht oder eine Hill-Holder oder Berg-Anfahrhilfe aktiv ist oder die Assistenz-Steuereinrichtung 130 oder die Betriebsbrems-Steuereinrichtung 110 ausgefallen oder defekt sind.

Ob die manuelle oder die automatisierte Aktivierung von der pneumatischen Parkbremsen 105 umgesetzt wird, wird über eine Schaltstellung Z1, Z2 eines elektrisch steuerbaren monostabilen Bypass-Ventils 16 festgelegt, wobei das monostabile Bypass-Ventil 16 als 3/2-Wegeventil ausgeführt ist. Ein erster Wege-Eingang 16a des monostabilen Bypass-Ventils 16 ist über eine Verbindungsleitung 17 mit dem Parkbremsventil 15 verbunden und ein zweiter Wege-Eingang 16b mit einem Bypass-Entlüftungsanschluss 16c. Ein Wege-Ausgang 16d des monostabilen Bypass-Ventils 16 ist über eine Steuerleitung 19 mit dem pneumatischen Steuereingang 14b des Parkbrems-Relaisventils 14 verbunden, über die ein Bypass-Steuerdruck p16, der in diesem Ausführungsbeispiel den Parkbrems-Steuerdruck pC vorgibt, übertragen wird.

Bei manueller Aktivierung der pneumatischen Parkbremsen 105 über das Parkbremsventil 15 und in einer ersten Schaltstellung Z1 des monostabilen Bypass-Ventils 16 wird über das Parkbremsventil 15 - je nach Vorgabe der manuellen Parkbremskraft fPBm - ein Betätigungsdruck p15 vorgegeben, der über das monostabile Bypass-Ventil 16 als Bypass-Steuerdruck p16 bzw. Parkbrems-Steuerdruck pC an das Parkbrems-Relaisventil 14 geleitet wird. Die manuelle Parkbremskraft fPBm und somit der Parkbrems-Steuerdruck pC können hierbei vorzugsweise stufenlos durch eine entsprechende manuelle Betätigung durch den Fahrer vorgegeben werden.

In der ersten Schaltstellung Z1 ist das monostabile Bypass-Ventil 16 unbestromt. Diese erste Schaltstellung Z1 ist somit eine stabile Schaltstellung, in die das monostabile Bypass-Ventil 16 ohne ein vorgegebenes Bypass-Signal SU automatisch zurückfällt, was beispielsweise durch eine Federvorspannung erreicht werden kann.

Bei maximaler manueller Parkbremskraft fPBm bzw. voller Betätigung des Parkbremsventils 15 und eingestellter erster Schaltstellung Z1 wird die Verbindungsleitung 17 über einen zweiten Parkbrems-Entlüftungsanschluss 15a vollständig entlüftet, so dass ein niedriger Betätigungsdruck p15 (in etwa der Atmosphärendruck pAtm) als Parkbrems-Steuerdruck pC am pneumatischen Steuereingang 14b des Parkbrems-Relaisventils 14 anliegt. Bei minimaler manueller Parkbremskraft fPBm bzw. unbetätigtem Parkbremsventil 15 wird aus dem Parkbrems-Druckmittelvorrat 20C über das Parkbremsventil 15 ein hoher Betätigungsdruck p15 als Parkbrems-Steuerdruck pC vorgegeben. In Abhängigkeit des Parkbrems-Steuerdruckes pC wird dann durch das Parkbrems-Relaisventil 14 in entsprechender Höhe der Parkbrems-Bremsdruck pPB erzeugt und an die Federspeicherzylinder 3a, 4a ausgegeben, die bei einem niedrigen Parkbrems-Bremsdruck pPB, der kleiner als der Öffnungsdruck pO ist, schließen und sonst öffnen.

Soll eine automatisierte Aktivierung der pneumatischen Parkbremse 105 über die Parkbrems-Steuereinrichtung 120 in Abhängigkeit der elektrischen Parkbremskraft fPBe erfolgen, wird das Bypass-Ventil 16 von der Parkbrems-Steuereinrichtung 120 über ein Bypass-Signal SU durch Bestromung zumindest zeitweise in seine zweite Schaltstellung Z2 gebracht, wobei die zweite Schaltstellung Z2 nicht-stabil ist, d.h. diese zweite Schaltstellung Z2 wird bei Wegfall des Bypass-Signals SU und somit ohne Bestromung nicht beibehalten.

In dieser zweiten Schaltstellung Z2 wird der Bypass-Entlüftungsanschluss 16c mit dem Wege-Ausgang 16d des monostabilen Bypass-Ventils 16 verbunden, so dass ein im Bypass-Entlüftungsanschluss 16c wirkender niedriger Entlüftungsdruck pE, der etwa dem Atmosphärendruck pAtm entspricht, als Bypass-Steuerdruck p16 bzw. Parkbrems-Steuerdruck pC am pneumatischen Steuereingang 14b anliegt. Die Höhe des Parkbrems-Steuerdruckes pC entspricht in diesem Fall also in etwa der Höhe, die vorherrscht, wenn in der ersten Schaltstellung Z1 des monostabilen Bypass-Ventils 16 eine maximale manuelle Parkbremskraft fPBm durch das Parkbremsventil 15 vorgegeben wird und dadurch ebenfalls eine Entlüftung der Verbindungsleitung 17 - in diesem Fall über den Parkbrems-Entlüftungsanschluss 15a - stattfindet.

Somit kann der Parkbrems-Steuerdruck pC auch über eine elektrische Ansteuerung vorgegeben werden und somit eine elektrische Betätigung der pneumatischen Parkbremsen 105 erfolgen. Das Bypass-Signal SU kann hierbei je nach elektrischer Parkbremskraft fPBe kontinuierlich oder aber gepulst vorgegeben werden, d.h. das monostabile Bypass-Ventil 16 befindet sich bei einer automatisierten Ansteuerung dauerhaft in der zweiten Schaltstellung Z2 oder wechselt mit einer bestimmten Frequenz zwischen der ersten und der zweiten Schaltstellung Z1, Z2 hin und her.

Bei einer kontinuierlichen Ansteuerung des monostabilen Bypass-Ventils 16 in der zweiten Schaltstellung Z2 ist lediglich eine vollständige Entlüftung über den Bypass-Entlüftungsanschluss 16c möglich, so dass der Parkbrems-Steuerdruck pC in dieser zweiten Schaltstellung Z2 auf einen Wert festgelegt ist, und zwar den Entlüftungsdruck pE; die Federspeicherzylinder 3a, 4a sind also dauerhaft zugespannt, was insbesondere für ein dauerhaftes Abstellen des Fahrzeuges beim Parken, im Redundanzfall oder für ein längeres Halten des Fahrzeuges im Stillstand, beispielsweise an einer Haltestelle, relevant ist.

Bei einer gepulsten Ansteuerung des monostabilen Bypass-Ventils 16 hingegen ist auch eine abgestufte Betätigung der Federspeicherzylinder 3a, 4a möglich, beispielweise wenn kein Abstellen des Fahrzeuges gewünscht ist sondern eine abgestufte Hilfsbremsung oder redundante Bremsung mit einer bestimmten nicht-maximalen elektrischen Parkbremskraft fPBe erfolgen soll. Denn der Parkbrems-Steuerdruck pC entspricht in diesem Fall je nach Frequenz des Umschaltens einer Mischung, vorzugsweise einem Mittelwert, aus dem Betätigungsdruck p15 und dem Entlüftungsdruck pE. Die Abstufung bzw. der letztlich ausgesteuerte Parkbrems-Steuerdruck pC wird hierbei durch die Frequenz des in dem Fall pulsierenden Bypass-Signals SU bestimmt. Dies kann bei einer Hilfsbremsung oder einer redundanten Bremsung während der Fahrt dazu dienen, das Fahrzeug 200 stabil in einen sicheren Zustand abzubremsen, da durch das Variieren des Parkbrems-Steuerdruckes pC und somit auch des Parkbrems-Bremsdruckes pPB eine Stotterbremsfunktion SF ausgebildet werden kann, durch die ein dauerhaftes Blockieren der Räder verhindert werden kann. Durch eine zusätzliche, optionale Drossel 31 kann der Verlauf des Parkbrems-Steuerdruckes pPB durch eine Volumenstrombegrenzung in Richtung des Bypass-Entlüftungsanschlusses 16c geglättet werden, da ein Abbau des Druckes auf den Entlüftungsdruck pE langsamer erfolgt.

Über einen zusätzlichen Drucksensor bzw. einen einfachen Druckschalter 18, der den Parkbrems-Steuerdruck pC abgreift, kann zusätzlich erreicht werden, dass die Parkbrems-Steuereinrichtung 120 erkennen kann, ob der Fahrer bei aktiver erster Schaltstellung Z1 des monostabilen Bypass-Ventils 16 selbst eine Parkbremsung veranlasst oder nicht und somit eine automatisierte Anforderung über die zweite Schaltstellung Z2 nötig ist oder nicht.

Bei einem Ausfall der Parkbrems-Steuereinrichtung 120 oder der Ansteuerung des monostabilen Bypass-Ventils 16 kann ergänzend vorgesehen sein, den Fahrer über eine Warneinrichtung 26 aufzufordern, das Parkbremsventil 15 manuell zu betätigen oder andere Sicherheitsmaßnahmen einzuleiten, um das Fahrzeug 200 sicher im Stillstand zu halten. Zudem kann von der Parkbrems-Steuereinrichtung 120 auch ein Abbremsen über die Betriebsbremsen 1, 2, 3b, 4b im Fahrzeug 200 angefordert werden.

Weiterhin ist im Fahrzeug 200 ein Anhängersteuerventil 21 vorgesehen, dem zum einen der Betriebsbrems-Steuerdruck pA für den ersten Achsmodulator 9 der Vorderachse VA und der Parkbrems-Bremsdruck pPB des Parkbrems-Relaisventils 14 zugeleitet wird. Darüber kann auch ein nicht dargestellter Anhänger zum Bewirken einer entsprechenden Bremsung angesteuert werden.

Gemäß der Ausführungsform in Fig. 1b ist die Position des Bypass-Ventils 16 gegenüber Fig. 1a verändert. Demnach ist das monostabile Bypass-Ventil 16 nicht zwischen dem Parkbremsventil 15 und dem pneumatischen Steuereingang 14b des Parkbrems-Relaisventils 14 angeordnet sondern zwischen einem pneumatischen Bremsdruckausgang 14c des Parkbrems-Relaisventils 14 und den Federspeicherzylindern 3a, 4a. Die Funktionsweise des monostabilen Bypass-Ventils 16 ist weitestgehend identisch mit dem Unterschied, dass das monostabile Bypass-Ventil 16 nun den Parkbrems-Bremsdruck pPB vorgibt und nicht mehr den Parkbrems-Steuerdruck pC. In der ersten Schaltstellung Z1 des monostabilen Bypass-Ventils 16 wird hierbei der vom Parkbrems-Relaisventil 14 ausgegebene luftmengenverstärke Relaisventil-Druck p14 als Parkbrems-Bremsdruck pPB an die Federspeicherzylinder 3a, 4a ausgesteuert und in der zweiten Schaltstellung der Entlüftungsdruck pE als Parkbrems-Bremsdruck pPB, so dass die Federspeicherzylinder 3a, 4a in der ersten Schaltstellung Z1 den Fahrerwunsch umsetzen und in der zweiten Schaltstellung Z2 durch eine Entlüftung zugespannt werden.

Grundsätzlich kann das zwischengeschaltete Parkbrems-Relaisventil 14, das lediglich zur Luftmengenverstärkung dient, aber auch entfallen. D.h. der Betätigungsdruck p15 wird in der ersten Schaltstellung Z1 und der Entlüftungsdruck pE in der zweiten Schaltstellung Z2 des monostabilen Bypass-Ventils 16 direkt als Parkbrems-Bremsdruck pPB an die Federspeicherzylinder 3a, 4a geleitet.

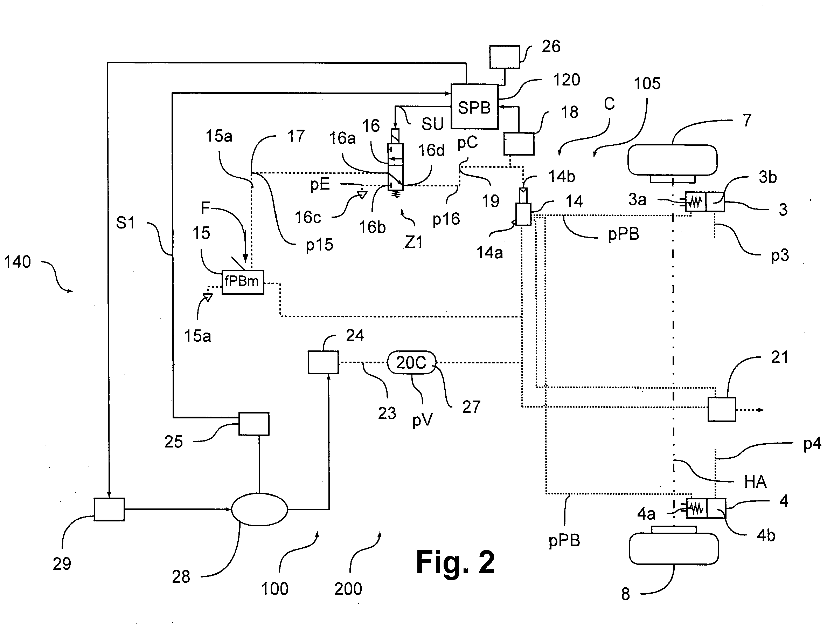

Gemäß Fig. 2 ist eine spezielle Ausführungsform einer Entlüftungsfunktion 140 dargestellt. Diese Entlüftungsfunktion 140 sorgt dafür, dass beispielsweise nach einem automatisierten Zuspannen der Federspeicherzylinder 3a, 4a über die Parkbrems-Steuereinrichtung 120, beispielsweise im Rahmen einer der Komfortfunktionen oder im Redundanzfall, das abgestellte oder parkende Fahrzeug 200 auch ohne ein dauerhaftes Bestromen des Bypass-Ventils 16 über das Bypass-Signal SU, um die Steuerleitung 19 zu entlüften, sicher im Stillstand gehalten werden kann, wenn der Fahrer das Parkbremsventil 15 manuell nicht betätigt. Dadurch kann auch dann, wenn eine ausreichende Bestromung des monostabilen Bypass-Ventils 16 nicht mehr möglich ist, ein sicheres Abstellen des Fahrzeuges gewährleistet werden. Diese Entlüftungsfunktion 140 kann aber auch ohne eine vorherige automatisierte Aktivierung beispielsweise dann vorgesehen sein, wenn erkannt wird, dass der Fahrer das Fahrzeug 200 abstellen oder parken möchte, dabei aber vergisst, manuell das Parkbremsventil 15 zu betätigen und somit die pneumatische Parkbremse 105 manuell zu aktivieren.

In einer Auffüllleitung 23 des Parkbrems-Druckmittelvorrats 20C für den Parkbrems-Bremskreis C ist dazu eine Druckmittelvorrat-Befüllungseinrichtung 24 vorgesehen, die im Normalbetrieb dafür sorgt, dass der Parkbrems-Druckmittelvorrat 20C mit ausreichend Vorratsdruckmittel 27 befüllt wird, um auch nach mehreren Entlüftungsphasen über den Parkbrems-Entlüftungsanschluss 15a, den Bypass-Entlüftungsanschluss 16c oder einen Relaisventil-Entlüftungsanschluss 14a am Parkbrems-Relaisventil 14 einen ausreichenden Vorratsdruck pV im Parkbrems-Druckmittelvorrat 20C des Parkbrems-Bremskreises C bereitzustellen.

Die Druckmittelvorrat-Befüllungseinrichtung 24 steht gemäß dieser Ausführungsform mit einem von einer Motor-Steuereinrichtung 25 gesteuerten Motor 28 in Wirkverbindung, wobei bei eingeschaltetem Motor 28 über eine nicht dargestellte Pumpe der Druckmittelvorrat- Befüllungseinrichtung 24 das Vorratsdruckmittel 27 in den Parkbrems-Druckmittelvorrat 20C gepumpt wird, um diesen wieder aufzufüllen. Bei Abschalten des Motors 28 des Fahrzeuges 200 wird die Pumpe der Druckmittelvorrat-Befüllungseinrichtung 24 abgeschaltet und somit eine Druckmittelzufuhr in den Parkbrems-Druckmittelvorrat 20C unterbunden bis der Motor 28 wieder eingeschaltet wird. Gleichzeitig wird der Parkbrems-Steuereinrichtung 120 über ein Abschalt-Signal S1 von der Motor-Steuereinrichtung 25 mitgeteilt, ob der Motor 28 ausgeschaltet ist oder nicht. Alternativ kann die Parkbrems-Steuereinrichtung 120 ein Abschalten des Motors 28 auch über eine Klemme der Zündung auslesen.

Ist der Motor 28 ausgeschaltet und wird über den Druckschalter 18 festgestellt, dass der Fahrer in der ersten Schaltstellung Z1 des monostabilen Bypass-Ventils 16 das Parkbremsventil 15 nicht betätigt - d.h. der Parkbrems-Steuerdruck pC ist gering - sorgt die Parkbrems-Steuereinrichtung 120 für ein Umschalten des Bypass-Ventils 16:
Wurde das Fahrzeug 200 nach einer automatisierten Aktivierung der Parkbremse 105 abgestellt oder geparkt oder im Redundanzfall automatisiert in den Stillstand befördert, wird das Bypass-Ventil 16 in die erste Schaltstellung Z1 gebracht. Da der Fahrer vergessen hat, im Stillstand das Parkbremsventil 15 zu betätigen, wird dadurch automatisch das Vorratsdruckmittel 27 aus dem Parkbrems-Druckmittelvorrat 20C entnommen und in die Verbindungsleitung 17 sowie die Steuerleitung 19 eingeleitet woraufhin der Parkbrems-Steuerdruck pC steigt. Sobald der Parkbrems-Steuerdruck pC so stark angestiegen ist, dass ein Parkbrems-Bremsdruck pPB erzeugt wird, der höher ist als ein Grenzdruck pG, schaltet die Parkbrems-Steuereinrichtung 120 das Bypass-Ventil 16 wieder in die zweite Schaltstellung Z2.

Der Grenzdruck pG liegt hierbei beispielsweise bei 4bar und damit unterhalb des Öffnungsdruckes pO der Federspeicherzylinder 3a, 4a. Dadurch wird verhindert, dass das automatisiert im Stillstand gehaltene Fahrzeug 200 durch ein Öffnen der hinteren Radbremsen 3, 4 beginnt zu rollen.

Gleichzeitig wird erreicht, dass ein Teil des Vorratsdruckmittels 27 aus dem Parkbrems-Druckmittelvorrat 20C entnommen wird und damit der Vorratsdruck pV im Parkbrems-Druckmittelvorrat 20C sinkt, da im Parkbrems-Bremskreis C der Parkbrems-Steuerdruck pC sowie der Parkbrems-Bremsdruck pPB aus dem Parkbrems-Druckmittelvorrat 20C bereitgestellt werden. Durch das anschließende Umschalten in die zweite Schaltstellung Z2 wird das Druckmittel in der Steuerleitung 19 mit dem Parkbrems-Steuerdruck pC in den Bypass-Entlüftungsanschluss 16c und aufgrund des dadurch sinkenden Parkbrems-Steuerdruckes pC auch das Druckmittel aus den Federspeicherzylindern 3a, 4a mit dem Parkbrems-Bremsdruck pPB durch den Relaisventil-Entlüftungsanschluss 14a im Parkbrems-Relaisventil 14 abgelassen.

Dieser Vorgang wird sooft wiederholt, bis der Parkbrems-Druckmittelvorrat 20C durch das mehrmalige Ablassen des Parkbrems-Steuerdruckes pC bzw. des Parkbrems-Bremsdruckes pPB entleert ist oder der Vorratsdruck pV unter den Öffnungsdruck pO gefallen ist. Ist dies der Fall, reicht selbst bei unbetätigtem Parkbremsventil 15 und unbestromtem Bypass-Ventil 16 der Vorratsdruck pV im Parkbrems-Druckmittelvorrat 20C nicht mehr aus, um die Federspeicherzylinder 3a, 4a zu lösen; das Fahrzeug 200 wird auch bei unbetätigtem Parkbremsventil 15 im Stillstand gehalten bis die Zündung wieder betätigt wird und/oder der Motor wieder läuft und dadurch der Parkbrems-Druckmittelvorrat 20C gesteuert durch die Druckmittelvorrat- Befüllungseinrichtung 24 wieder befüllt wird.

Die Entlüftungsfunktion 140 kann beispielsweise auch dann aktiviert werden, wenn von der Parkbrems-Steuereinrichtung 120 eine Wegfahrsperre 29 aktiviert wird, die dafür sorgt, dass die Treibstoffzufuhr zum Motor 28 unterbunden wird und der Motor 28 dadurch abgewürgt wird und die Druckmittelvorrat-Befüllungseinrichtung 24 auch kein Vorratsdruckmittel 27 mehr nachliefert. Dies kann beispielsweise dann erfolgen, wenn im Redundanzfall aus Sicherheitsaspekten ein sicheres Bremsen des Fahrzeuges 200 in den Stillstand oder ein Halten des Fahrzeuges 200 im Stillstand zwingend erforderlich ist. Nach dem Ansteuern der Wegfahrsperre 29 wird automatisch das monostabile Bypass-Ventil 16 gemäß obiger Systematik angesteuert, um den Vorratsdruck pV unter den Öffnungsdruck pO zu reduzieren und dadurch ein Lösen der Federspeicherzylinder 3a, 4a zu verhindern.

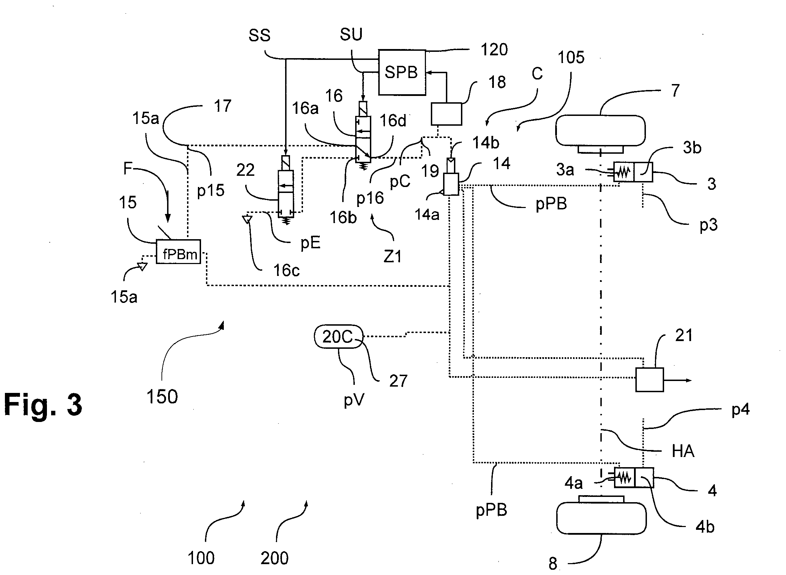

Gemäß Fig. 3 ist eine weitere Ausführung des elektropneumatischen Bremssystems 100 gezeigt. Demnach ist ein zusätzliches Sicherheitsventil 22 vorgesehen, das gleichzeitig mit dem Bypass-Ventil 16 von der Parkbrems-Steuereinrichtung 120 über ein Sicherheitssignal SS umgeschaltet bzw. bestromt werden kann. Dadurch kann verhindert werden, dass bei einem fehlerhaften und somit unbeabsichtigten Umschalten des Bypass-Ventils 16 eine Entlüftung über den Bypass-Entlüftungsanschluss 16c und somit ein ungewolltes Abbremsen über die hinteren Radbremsen 3, 4 stattfindet. Dadurch kann eine Sicherheitsfunktion 150 ausgebildet werden, da nur dann, wenn tatsächlich beide Ventile 16, 22 gleichzeitig bestromt werden, die Steuerleitung 19 entlüftet und dem Parkbrems-Relaisventil 14 ein entsprechend niedriger Parkbrems-Steuerdruck pC vorgegeben wird, um über die hinteren Radbremsen 3, 4 abzubremsen.

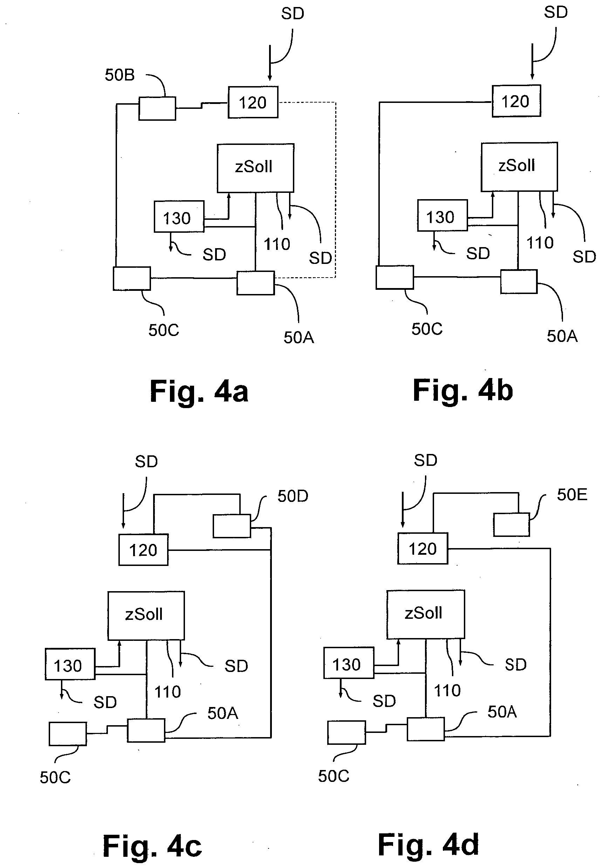

Gemäß den Figuren 4a, b, c, d sind unterschiedliche Varianten für eine redundante Energieversorgung gezeigt, die im Redundanzfall dafür sorgen können, dass die Parkbrems-Steuereinrichtung 120 das Bypass-Ventil 16 ansteuern kann.

Gemäß einer Ausführungsform ist wie in Fig. 4a dargestellt eine erste Energiequelle 50A vorgesehen, die sowohl die Betriebsbrems-Steuereinrichtung 110, die Assistenz-Steuereinrichtung 130 und ggf. auch die Parkbrems-Steuereinrichtung 120 mit Energie versorgt sowie eine zweite, die Parkbrems-Steuereinrichtung 120 ebenfalls oder ausschließlich mit Energie versorgende Energiequelle 50B. Die erste Energiequelle 50A und die zweite Energiequelle 50B sind beide an einen Generator 50C, beispielsweise eine Lichtmaschine des Nutzfahrzeugs 200, angeschlossen.

Bei einem Ausfall der ersten Energiequelle 50A, bei der das Bremssystem 100 nicht mehr über die Betriebsbrems-Steuereinrichtung 110 und die Achsmodulatoren 9, 10 elektrisch gesteuert werden kann, ist somit eine elektrisch redundante Ansteuerung über die Parkbrems-Steuereinrichtung 120 sichergestellt, da die zweite Energiequelle 50B den Ausfall kompensieren kann.

Alternativ kann auch lediglich die erste an den Generator 50C angeschlossene Energiequelle 50A verwendet werden, die über eine Sicherung mit der Betriebsbrems-Steuereinrichtung 110 und der Assistenz-Steuereinrichtung 130 und über eine weitere Sicherung mit der Parkbrems-Steuereinrichtung 120 verbunden ist.

Gemäß einer in Fig. 4b dargestellten alternativen Ausführungsform ist vorgesehen, die Parkbrems-Steuereinrichtung 120 in entsprechender Weise direkt an den Generator 50C anzuschließen und darüber eine Energieversorgung sicherzustellen und die Betriebsbrems-Steuereinrichtung 110 und die Assistenz-Steuereinrichtung 130 an die erste Energiequelle 50A. Der Generator 50C und die erste Energiequelle 50A sind dabei derartig voneinander getrennt, dass ein Kurzschluss im Generator 50C nicht zwangsläufig für einen Kurzschluss in der ersten Energiequelle 50A und umgedreht sorgt, so dass beide im Redundanzfall unabhängig voneinander Energie liefern können.

Gemäß einer in Fig. 4c dargestellten Ausführungsform ist vorgesehen, einen Kurzzeitspeicher 50D, beispielsweise einen Kondensator, insbesondere ein Power-Cap, als Energiequelle zu verwenden, der von der ersten Energiequelle 50A im Normalbetrieb aufgeladen wird. Fällt die erste Energiequelle 50A aus, wird der aufgeladene Kurzzeitspeicher 50D als Energiequelle für die Parkbrems-Steuereinrichtung 120 verwendet.

Gemäß einer weiteren Ausführungsform ist gemäß Fig. 4d vorgesehen, einen Hochvoltspeicher 50E als redundante Energieversorgung zu verwenden, der in Hybridfahrzeugen als Energiequelle für einen Antrieb verwendet wird. Dieser ist ebenfalls unabhängig von der ersten Energiequelle 50A und kann somit als redundante Energiequelle für die Parbkrems-Steuereinrichtung 120 verwendet werden.

Alternativ kann auch ein zusätzliches redundantes Bordnetz aufgebaut werden.

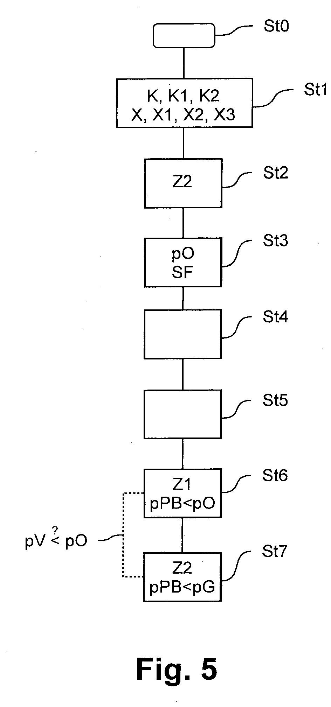

Die Ansteuerung des elektropneumatischen Bremssystems 100 im Rahmen der Entlüftungsfunktion 140 kann gemäß Fig. 5 beispielsweise folgendermaßen durchgeführt werden:
In einem anfänglichen Schritt St0 startet das Verfahren, beispielsweise mit dem Starten des Fahrzeuges 200.

In einem ersten Schritt St1 wird durch die Parkbrems-Steuereinrichtung 120 eine beliebige Komfortfunktion K, beispielsweise eine Hill-Holder-Funktion K1 oder eine Berg-Anfahrhilfe K2, aktiviert oder von einer Assistenz-Steuereinrichtung 130 wird eine automatische Parkbremsfunktion X1 oder eine Hilfsbremsfunktion X2 oder eine Redundanzfunktion X3 vorgegeben, d.h. es wird automatisiert eine Bremsung über die Federspeicherzylinder 3a, 4a angefordert, indem eine entsprechend hohe elektrische Parkbremskraft fPBe vorgegeben wird. In einem zweiten Schritt St2 wird daraufhin das Bypass-Ventil 16 zumindest zeitweise in die zweite Schaltstellung Z2 gebracht, die im bestromten Zustand des Bypass-Ventils 16 über das Bypass-Signal SU eingestellt wird. Dadurch wird die Steuerleitung 19 über den Bypass-Entlüftungsanschluss 16c zumindest zeitweise entlüftet und somit ein niedriger Parkbrems-Steuerdruck pC vorgegeben. Das Parkbrems-Relaisventil 14 gibt dadurch in einem dritten Schritt St3 einen dementsprechend niedrigen Parkbrems-Bremsdruck pPB vor, der zu einem Schließen der Federspeicherzylinder 3a, 4a führt, da der Parkbrems-Bremsdruck pPB in dem Fall niedriger als der Öffnungsdruck pO ist. Das Fahrzeug 200 wird dadurch automatisiert im Stillstand gehalten oder in den Stillstand überführt, wobei dazu durch ein abwechselndes Umschalten zwischen der ersten und der zweiten Schaltstellung Z1, Z2 des Bypass-Ventils 16 auch eine variabler Parkbrems-Bremsdruck pPB eingestellt werden kann. Dadurch wird eine Stotterbremsfunktion SF ausgebildet, die ein dauerhaftes Blockieren der Räder verhindert.

Wird in einem vierten Schritt St4 über das Abschalt-Signal S1 oder über eine Aktivierung der Wegfahrsperre 29 festgestellt, dass das Fahrzeug 200 dauerhaft - gewollt oder gezwungen - abgestellt oder geparkt wird oder werden soll und wird über den Druckschalter 18 erkannt, dass gleichzeitig keine Aktivierung der Parkbremsfunktion durch manuelle Betätigung des Parkbremsventils 15 durch den Fahrer vorliegt, wird in einem fünften Schritt St5 von der Druckvorrats-Befüllungseinrichtung 24 ein weiteres Befüllen des Parkbrems-Druckmittelvorrats 20C gestoppt, da die Versorgung der Druckvorrats-Befüllungseinrichtung 24 über den Motor 28 mit Energie in diesem Fall wegfällt und somit kein Nachpumpen von Druckmittel mehr stattfinden kann. In einem sechsten Schritt St6 wird anschließend von der Parkbrems-Steuereinrichtung 120 das Bypass-Ventil 16 in die erste Schaltstellung Z1 gebracht, so dass ein Parkbrems-Steuerdruck pC und ein Parkbrems-Bremsdruck pPB aufgebaut werden, wobei der Parkbrems-Bremsdruck pPB unterhalb des Öffnungsdruckes pO liegt, d.h. die Federspeicher 3a, 4a nicht geöffnet werden. Dadurch wird das Vorratsdruckmittel 27 aus dem Parkbrems-Druckmittelvorrat 20C verbraucht.

Bevor der Parkbrems-Bremsdruck pPB den Öffnungsdruck pO oder einen Grenzdruck pG von beispielsweise 4bar erreicht, wird in einem siebenten Schritt St7 das Bypass-Ventil 16 in die zweite Schaltstellung Z2 gebracht, so dass sich der Parkbrems-Bremsdruck pPB durch ein Entlüften über den Relaisventil-Entlüftungsanschluss 14a und der Parkbrems-Steuerdruck pC durch ein Entlüften in den Bypass-Entlüftungsanschluss 16c reduziert. Durch die Entlüftung wird Druckmittel abgelassen, das dem Bremssystem 100 somit nicht mehr zur Verfügung steht.

Die Schritte St6 und St7 werden so lange wiederholt, bis der Vorratsdruck pV im Parkbrems-Druckmittelvorrat 20C zumindest unterhalb des Öffnungsdruckes pO der Federspeicherzylinder 3a, 4a liegt. Dadurch wird im Folgenden selbst bei einem nicht manuell aktivierten Parkbremsventil 15 das Fahrzeug 200 im Stillstand gehalten, da der Vorratsdruck pV im Parkbrems-Druckmittelvorrat 20C nicht ausreicht, um die Federspeicherzylinder 3a, 4a in die geöffnete bzw. gelöste Betätigungsstellung zu überführen. Dadurch muss das Bypass-Ventil 16 bei abgestelltem Fahrzeug 200 nicht in seiner zweiten, bestromten Schaltstellung Z2 gehalten werden und kann vielmehr in die erste, stabile Schaltstellung Z1 übergehen.

Die Schritte St1 bis St4 können auch entfallen, wobei dann die Entlüftungsfunktion 140 lediglich über die Schritte St5 bis St7 umgesetzt wird. Dies ist dann vorteilhaft, wenn festgestellt wurde, dass der Fahrer das Fahrzeug 200 ohne manuelle Betätigung des Parkbremsventils 15 abstellen oder parken möchte. Auch in dem Fall werden die Schritte St6 und St7 so lange durchgeführt, bis der Vorratsdruck pV zumindest unter den Öffnungsdruck pO gefallen ist.

### Bezugszeichenliste (Bestandteil der Beschreibung)

- 1, 2, 3, 4: Radbremsen
- 3a, 4a: Federspeicherzylinder
- 3b, 4b: Betriebsbremszylinder
- 5, 6, 7, 8: Räder
- 9: erster Achsmodulator an den Vorderachse VA
- 10: zweiter Achsmodulator an der Hinterachse VB
- 11: Fußbremsventil
- 14: Parkbrems-Relaisventil
- 14a: Relaisventil-Entlüftungsanschluss
- 14b: pneumatischer Steuereingang
- 14c: pneumatischen Bremsdruckausgang
- 15: Parkbremsventil
- 15a: Parkbrems-Entlüftungsanschluss
- 16: Bypass-Ventil
- 16a, 16b: Wege-Eingang
- 16c: Bypass-Entlüftungsanschluss
- 16d: Wege-Ausgang
- 17: Verbindungsleitung
- 18: Drucksensor/Druckschalter
- 19: Steuerleitung
- 20A: erster Druckmittelvorrat für den ersten Betriebsbrems-Bremskreis A
- 20B: zweiter Druckmittelvorrat für den zweiten Betriebsbrems-Bremskreis B
- 20C: Parkbrems-Druckmittelvorrat
- 21: Anhängersteuerventil
- 22: Sicherheitsventil
- 23: Auffüllleitung
- 24: Druckmittelvorrat-Befüllungseinrichtung
- 25: Motor-Steuereinrichtung
- 26: Warneinrichtung
- 27: Vorratsdruckmittel
- 28: Motor
- 29: Wegfahrsperre
- 50A: erste Energiequelle
- 50B: zweite Energiequelle
- 50C: Generator
- 50D: Kurzzeitspeicher
- 50E: Hochvoltspeicher
- 100: elektropneumatisches Bremssystem
- 105: Parkbremse
- 110: Betriebsbrems-Steuereinrichtung (ECU)
- 120: Parkbrems-Steuereinrichtung
- 130: Assistenz-Steuereinrichtung (ADAS-ECU)
- 140: Entlüftungsfunktion
- 150: Sicherheitsfunktion
- 200: Fahrzeug

- A, B: Betriebsbrems-Bremskreise
- C: Parkbrems-Bremskreis
- F: Betätigung
- fPBe: elektrische Parkbremskraft
- fPBm: manuelle Parkbremskraft
- HA: Hinterachse
- K: Komfortfunktion
- K1: Hill-Holder-Funktion
- K2: Berg-Anfahrhilfe
- pA, pB: Betriebsbrems-Steuerdruck
- pAtm: Atmosphärendruck
- pC: Parkbrems-Steuerdruck
- pE: Entlüftungsdruck
- pG: Grenzdruck
- pO: Öffnungsdruck
- pPB: Parkbrems-Bremsdruck
- pV: Vorratsdruck
- p1, p2, p3, p4: Betriebsbrems-Bremsdruck
- p14: Relaisventil-Druck
- p15: Betätigungsdruck
- p16: Bypass-Steuerdruck
- SA, SB: Steuersignale
- SF: Stotterbremsfunktion
- SPB: Parkbrems-Signal
- SS: Sicherheits-Signal
- SU: Bypass-Signal
- S1: Abschalt-Signal
- VA: Vorderachse
- X1: Parkbremsfunktion
- X2: Hilfsbremsfunktion
- X3: Redundanzfunktion
- zSoll: Fahrzeug-Soll-Verzögerung
- Z1: erste Schaltstellung
- Z2: zweite Schaltstellung
- St1, St2, St3, St4, St5, St6, St7: Schritte des Verfahrens

## Patentansprüche

1. Elektronisch steuerbares pneumatisches Bremssystem (100) in einem Fahrzeug (200), insbesondere Nutzfahrzeug (200), mindestens aufweisend:
Radbremsen (1, 2, 3, 4) zum Abbremsen von Rädern (5, 6, 7, 8) des Fahrzeuges (200), wobei Radbremsen (3, 4) mindestens einer Fahrzeugachse (HA, VA) Federspeicherzylinder (3a, 4a) aufweisen zum Ausbilden einer pneumatischen Parkbremse (105) in einem Parkbrems-Bremskreis (C) des Fahrzeuges (200),
ein elektronisch steuerbares monostabiles Bypass-Ventil (16), wobei das monostabile Bypass-Ventil (16) zwischen einem manuell betätigbaren Parkbremsventil (15) und den Federspeicherzylindern (3a, 4a) derartig angeordnet ist, dass das monostabile Bypass-Ventil (16) einen Bypass-Steuerdruck (p16) aussteuert zum Umsetzen einer Parkbremskraft,
**dadurch gekennzeichnet, dass**
das monostabile Bypass-Ventil (16)
- in einer ersten Schaltstellung (Z1) den Bypass-Steuerdruck (p16) in Abhängigkeit eines von dem Parkbremsventil (15) erzeugten Betätigungsdruckes (p15) aussteuert zum Umsetzen einer manuell vorgegebenen Parkbremskraft (fPBm),
wobei der Betätigungsdruck (p15) maximal einem Vorratsdruck (pV) entspricht, den ein Vorratsdruckmittel (27) in einem den Parkbrems-Bremskreis (C) versorgenden Parkbrems-Druckmittelvorrat (20C) aufweist, und
- in einer zweiten Schaltstellung (Z2) den Bypass-Steuerdruck (p16) in Abhängigkeit eines in einem Bypass-Entlüftungsanschluss (16c) vorherrschenden Entlüftungsdruckes (pE) aussteuert zum Umsetzen einer elektrisch vorgegebenen Parkbremskraft (fPBe),
wobei ein an die Federspeicherzylinder (3a, 4a) ausgesteuerter Parkbrems-Bremsdruck (pPB) in Abhängigkeit des jeweiligen Bypass-Steuerdruckes (p16) einstellbar ist, und
wobei das monostabile Bypass-Ventil (16) ohne eine elektrische Ansteuerung automatisch in die erste Schaltstellung (Z1) übergeht.

2. Elektronisch steuerbares pneumatisches Bremssystem (100) nach Anspruch 1, **dadurch gekennzeichnet, dass** zwischen dem manuell betätigbaren Parkbremsventil (15) und den Federspeicherzylindern (3a, 4a) weiterhin ein Parkbrems-Relaisventil (14) zum Erzeugen eines luftmengenverstärkten Relaisventil-Drucks (p14) in Abhängigkeit eines Parkbrems-Steuerdruckes (pC) derartig angeordnet ist, dass das monostabile Bypass-Ventil (16)
- in der ersten Schaltstellung (Z1) den von dem Parkbremsventil (15) erzeugten Betätigungsdruck (p15) als Bypass-Steuerdruck (p16) aussteuert und als Parkbrems-Steuerdruck (pC) an einen pneumatischen Steuereingang (14b) des Parkbrems-Relaisventils (14) leitet oder den aufgrund des Betätigungsdruckes (p15) vom Parkbrems-Relaisventil (14) erzeugten luftmengenverstärkten Relaisventil-Druck (p14) als Bypass-Steuerdruck (p16) aussteuert und als Parkbrems-Bremsdruck (pPB) an die Federspeicherzylinder (3a, 4a) leitet zum Umsetzen der manuell vorgegebenen Parkbremskraft (fPBm), und
- in einer zweiten Schaltstellung (Z2) den in dem Bypass-Entlüftungsanschluss (16c) vorherrschenden Entlüftungsdruck (pE) als Bypass-Steuerdruck (p16) aussteuert und als Parkbrems-Steuerdruck (pC) an den pneumatischen Steuereingang (14b) des Parkbrems-Relaisventils (14) leitet zum Umsetzen der elektrisch vorgegebenen Parkbremskraft (fPBe).

3. Elektronisch steuerbares pneumatisches Bremssystem (100), nach Anspruch 2, **dadurch gekennzeichnet, dass** das monostabile Bypass-Ventil (16) zwischen dem Parkbremsventil (15) und dem pneumatischen Steuereingang (14b) des Parkbrems-Relaisventils (14) angeordnet ist zum Ausgeben des Betätigungsdruckes (p15) als Parkbrems-Steuerdruck (pC) in der ersten Schaltstellung (Z1) und des Entlüftungsdruckes (pE) als Parkbrems-Steuerdruck (pC) in der zweiten Schaltstellung (Z2).

4. Elektronisch steuerbares pneumatisches Bremssystem (100), nach Anspruch 2, **dadurch gekennzeichnet, dass** das monostabile Bypass-Ventil (16) zwischen einem pneumatischen Bremsdruckausgang (14c) des Parkbrems-Relaisventils (14) und den Federspeicherzylindern (3a, 4a) angeordnet ist zum Ausgeben des Relaisventil-Drucks (p14) als Parkbrems-Bremsdruck (pPB) in der ersten Schaltstellung (Z1) und des Entlüftungsdruckes (pE) als Parkbrems-Bremsdruck (pPB) in der zweiten Schaltstellung (Z2).

5. Elektronisch steuerbares pneumatisches Bremssystem (100) nach einem der vorhergehenden Ansprüche, **dadurch gekennzeichnet, dass**
- bei Erkennen eines dauerhaften Abstellens des Fahrzeuges (200) und
- bei Erkennen eines unbetätigten Parkbremsventils (15) eine Entlüftungsfunktion (140) durchführbar ist, wobei durch die Entlüftungsfunktion (140) der Parkbrems-Druckmittelvorrat (20C) entleert werden kann zum dauerhaften Halten des Fahrzeuges (200) im Stillstand auch ohne elektrische Ansteuerung des monostabilen Bypass-Ventils (16).

6. Elektronisch steuerbares pneumatisches Bremssystem (100) nach Anspruch 5, **dadurch gekennzeichnet, dass** durch die Entlüftungsfunktion (140) ein Bereitstellen von Vorratsdruckmittel (27) für den Parkbrems-Bremskreis (C) mit einem Vorratsdruck (pV) von größer oder gleich einem Öffnungsdruck (pO) der Federspeicherzylinder (3a, 4a) verhinderbar ist zum Zuspannen der Federspeicherzylinder (3a, 4a) in der ersten Schaltstellung (Z1) des monostabilen Bypass-Ventils (16).

7. Elektronisch steuerbares pneumatisches Bremssystem (100) nach Anspruch 5 oder 6, **dadurch gekennzeichnet, dass** eine Druckmittelvorrat-Befüllungseinrichtung (24) mit einem Motor (28) des Fahrzeuges (200) derartig in Wirkverbindung steht, dass ein Auffüllen des Parkbrems-Druckmittelvorrats (20C) verhindert ist sobald der Motor (28) abgeschaltet ist, wobei bei abgeschaltetem Motor (28) gleichzeitig abwechselnd die erste und die zweite Schaltstellung (Z1, Z2) des monostabilen Bypass-Ventils (16) einstellbar ist zum Reduzieren des Vorratsdruckes (pV) im Parkbrems-Druckmittelvorrat (20C) durch Aufbauen eines Parkbrems-Bremsdruckes (pPB) aus dem Parkbrems-Druckmittelvorrat (20C) in der ersten Schaltstellung (Z1) und Entlüften des Parkbrems-Bremskreises (C) insbesondere über den Bypass-Entlüftungsanschluss (16c) in der zweiten Schaltstellung (Z2).

8. Elektronisch steuerbares pneumatisches Bremssystem (100), nach Anspruch 7, **dadurch gekennzeichnet, dass** ein Abschalten des Motors (28) über ein Abschalt-Signal (S1) oder durch Aktivierung einer Wegfahrsperre (29) erkannt werden kann.

9. Elektronisch steuerbares pneumatisches Bremssystem (100) nach einem der vorhergehenden Ansprüche, **dadurch gekennzeichnet, dass** das monostabile Bypass-Ventil (16) über ein von einer Parkbrems-Steuereinrichtung (120) vorgegebenes Bypass-Signal (SU) elektrisch ansteuerbar ist,
wobei das monostabile Bypass-Ventil (16) ohne eine Ansteuerung über das Bypass-Signal (SU) in die erste, unbestromte Schaltstellung (Z1) und bei einer Ansteuerung über das Bypass-Signal (SU) in die zweite, bestromte Schaltstellung (Z2) übergeht.

10. Elektronisch steuerbares pneumatisches Bremssystem (100) nach Anspruch 9, **dadurch gekennzeichnet, dass** die Parkbrems-Steuereinrichtung (120) ausgebildet ist, das Bypass-Signal (SU) derartig vorzugeben, dass das monostabile Bypass-Ventil (16) abwechselnd zwischen der ersten Schaltstellung (Z1) und der zweiten Schaltstellung (Z2) umgeschaltet werden kann zum Ausbilden einer abgestuften Bremsung und zum Ausbilden einer Stotterbremsfunktion (SF) durch Variieren des Parkbrems-Bremsdruckes (pPB).

11. Elektronisch steuerbares pneumatisches Bremssystem (100) nach Anspruch 10, **dadurch gekennzeichnet, dass** das Bypass-Signal (SU) pulsweitenmoduliert vorgebbar ist.

12. Elektronisch steuerbares pneumatisches Bremssystem (100) nach einem der Ansprüche 9 bis 11, **dadurch gekennzeichnet, dass** das Bypass-Signal (SU) von der Parkbrems-Steuereinrichtung (120) in Abhängigkeit einer Komfortfunktion (K), beispielsweise einer Hill-Holder-Funktion (K1) oder einer Berg-Anfahrhilfe (K2), oder in Abhängigkeit einer von einer Assistenz-Steuereinrichtung (130) vorgegebenen automatischen Parkbremsfunktion (X1) oder einer Hilfsbremsfunktion (X2) oder einer Redundanzfunktion (X3) vorgebbar ist.

13. Elektronisch steuerbares pneumatisches Bremssystem (100) nach Anspruch 12, **dadurch gekennzeichnet, dass** die Redundanzfunktion (X3) bei einem Ausfall oder einem Defekt bei der elektronischen Ansteuerung (SA, SB) der Achsmodulatoren (9, 10) aktivierbar ist, wobei dadurch das monostabile Bypass-Ventil (16) über das von der Parkbrems-Steuereinrichtung (120) vorgegebene Bypass-Signal (SU) elektrisch ansteuerbar ist zum redundanten elektropneumatischen Bremsen des Fahrzeuges (200) über die pneumatische Parkbremse (105).

14. Elektronisch steuerbares pneumatisches Bremssystem (100) nach einem der Ansprüche 9 bis 13, **dadurch gekennzeichnet, dass** der über das Parkbremsventil (15) ausgesteuerte Betätigungsdruck (p15) ohne Ansteuerung durch das Bypass-Signal (SU) in Abhängigkeit einer durch eine manuelle Betätigung (F) des Parkbremsventils (15) vorgegebenen manuellen Parkbremskraft (fPBm) erzeugbar ist.

15. Elektronisch steuerbares pneumatisches Bremssystem (100) nach einem der vorhergehenden Ansprüche, **dadurch gekennzeichnet, dass** zwischen dem monostabilen Bypass-Ventil (16) und dem Bypass-Entlüftungsanschluss (16c) ein Sicherheitsventil (22) angeordnet ist zum Ausbilden einer Sicherheitsfunktion (150), durch die bei ungewollter Einstellung der zweiten Schaltstellung (Z2) des monostabilen Bypass-Ventils (16) die Vorgabe des Entlüftungsdruckes (pE) als Bypass-Steuerdruck (p16) verhinderbar ist.

16. Verfahren zum elektronischen Steuern eines pneumatischen Bremssystems (100) nach einem der vorhergehenden Ansprüche, **gekennzeichnet durch** mindestens die folgenden Schritte:
- Feststellen, ob ein dauerhaftes Abstellen des Fahrzeuges (200) erfolgt und ob das Parkbremsventil (15) unbetätigt ist (St4),
- Aktivieren der Entlüftungsfunktion (140), wenn bei unbetätigtem Parkbremsventil (15) das Fahrzeug (200) dauerhaft abgestellt wird (St5, St6, St7), wobei die Entlüftungsfunktion (130) bewirkt, dass der Parkbrems-Druckmittelvorrat (20C) entleert wird, so dass das Vorratsdruckmittel (27) aus dem Parkbrems-Druckmittelvorrat (20C) mit einem Vorratsdruck (pV) in den Parkbrems-Bremskreis (C) zugeführt wird, der geringer ist als ein Öffnungsdruck (pO) der Federspeicherzylinder (3a, 4a), so dass die Federspeicherzylinder (3a, 4a) in der ersten Schaltstellung (Z1) des monostabilen Bypass-Ventils (16) zugespannt bleiben.

17. Verfahren nach Anspruch 16, **dadurch gekennzeichnet, dass** durch ein Abschalten des Motors (28) ein Befüllen des Parkbrems-Druckmittelvorrats (20C) über die Druckmittelvorrats-Befüllungseinrichtung (24) verhindert wird, wenn die Entlüftungsfunktion (130) aktiviert ist (St5), so dass bei einem darauffolgenden Einstellen der ersten Schaltstellung (Z1) des Bypass-Ventils (16) der Vorratsdruck (pV) aufgrund eines steigenden Parkbrems-Steuerdruckes (pC) sowie eines steigenden Parkbrems-Bremsdruckes (pPB) reduziert wird (St6) und bei einem anschließenden Einstellen der zweiten Schaltstellung (Z2) des Bypass-Ventils (16) der Parkbrems-Bremskreis (C) belüftet wird (St7).

18. Verfahren nach Anspruch 17, **dadurch gekennzeichnet, dass** ein Umschalten des Bypass-Ventils (16) in die zweite Schaltstellung (Z2) erfolgt, bevor der Parkbrems-Bremsdruck (pPB) gleich dem Öffnungsdruck (pO) ist (St7).

19. Verfahren nach Anspruch 17 oder 18, **dadurch gekennzeichnet, dass** zwischen der ersten und der zweiten Schaltstellung (Z1, Z2) (St6, St7) des Bypass-Ventils (16) mehrfach umgeschaltet wird, bis der Vorratsdruck (pV) unter den Grenzdruck (pG) bzw. den Öffnungsdruck (pO) gefallen ist.

20. Fahrzeug (200), insbesondere Nutzfahrzeug (200), mit einem elektronisch gesteuerten pneumatischen Bremssystem (100) nach einem der Ansprüche 1 bis 15.

## Claims

1. Electronically controllable pneumatic brake system (100) in a vehicle (200), in particular a utility vehicle (200), at least comprising:
wheel brakes (1, 2, 3, 4) for braking wheels (5, 6, 7, 8) of the vehicle (200), wherein wheel brakes (3, 4) of at least one vehicle axle (HA, VA) comprise spring-loaded cylinders (3a, 4a) for implementing a pneumatic parking brake (105) in a parking brake braking circuit (C) of the vehicle (200),
an electronically controllable monostable bypass valve (16), wherein the monostable bypass valve (16) is disposed between a manually operable parking brake valve (15) and the spring-loaded cylinders (3a, 4a) such that the monostable bypass valve (16) controls a bypass control pressure (p16) to implement a parking brake force,
**characterized in that**
the monostable bypass valve (16)
- in a first switching position (Z1) controls the bypass control pressure (p16) depending on an actuation pressure (p15) produced by the parking brake valve (15) to implement a manually specified parking brake force (fPBm),
wherein the maximum actuation pressure (p15) corresponds to a reservoir pressure (pV) of a reservoir pressure medium (27) in a parking brake pressure medium reservoir (20C) supplying the parking brake braking circuit (C), and
- in a second switching position (Z2) controls the bypass control pressure (p16) depending on a venting pressure (pE) prevailing in a bypass vent connection (16c) to implement an electrically specified parking brake force (fPBe),
wherein a parking brake braking pressure (pPB) controlled at the spring-loaded cylinders (3a, 4a) can be set depending on the respective bypass control pressure (p16), and
wherein the monostable bypass valve (16) automatically changes over to the first switching position (Z1) without electrical actuation.

2. Electronically controllable pneumatic brake system (100) according to Claim 1, **characterized in that** furthermore between the manually actuatable parking brake valve (15) and the spring-loaded cylinders (3a, 4a) a parking brake relay valve (14) for producing an air volume-boosted relay valve pressure (p14) depending on a parking brake control pressure (pC) is disposed such that the monostable bypass valve (16)
- in the first switching position (Z1) controls the actuation pressure (p15) produced by the parking brake valve (15) as the bypass control pressure (p16) and passes the same as the parking brake control pressure (pC) to a pneumatic control input (14b) of the parking brake relay valve (14), or controls the air volume-boosted relay valve pressure (p14) produced because of the actuation pressure (p15) by the parking brake relay valve (14) as the bypass control pressure (p16) and passes the same as the parking brake braking pressure (pPB) to the spring-loaded cylinders (3a, 4a) to implement the manually specified parking brake force (fPBm), and
- in a second switching position (Z2) controls the venting pressure (pE) prevailing in the bypass vent connection (16c) as the bypass control pressure (p16) and passes the same as the parking brake control pressure (pC) to the pneumatic control input (14b) of the parking brake relay valve (14) to implement the electrically specified parking brake force (fPBe).

3. Electronically controllable pneumatic brake system (100) according to Claim 2, **characterized in that** the monostable bypass valve (16) is disposed between the parking brake valve (15) and the pneumatic control input (14b) of the parking brake relay valve (14) to output the actuation pressure (p15) as the parking brake control pressure (pC) in the first switching position (Z1) and the venting pressure (pE) as the parking brake control pressure (pC) in the second switching position (Z2).

4. Electronically controllable pneumatic brake system (100), according to Claim 2, **characterized in that** the monostable bypass valve (16) is disposed between a pneumatic brake pressure output (14c) of the parking brake relay valve (14) and the spring-loaded cylinders (3a, 4a) to output the relay valve pressure (p14) as the parking brake braking pressure (pPB) in the first switching position (Z1) and the venting pressure (pE) as the parking brake braking pressure (pPB) in the second switching position (Z2).

5. Electronically controllable pneumatic brake system (100) according to any one of the preceding claims, **characterized in that**
- on detecting a long-term switch-off of the vehicle (200) and
- on detecting an unactuated parking brake valve (15) a venting function (140) can be carried out, wherein the parking brake pressure medium reservoir (20C) can be emptied by the venting function (140) to hold the vehicle (200) at a standstill for the long term, even without electrical actuation of the monostable bypass valve (16).

6. Electronically controllable pneumatic brake system (100) according to Claim 5, **characterized in that** the venting function (140) can prevent the provision of reservoir pressure medium (27) for the parking brake braking circuit (C) with a reservoir pressure (pV) of greater than or equal to an opening pressure (pO) of the spring-loaded cylinders (3a, 4a) to apply the spring-loaded cylinders (3a, 4a) with the monostable bypass valve (16) in the first switching position (Z1).

7. Electronically controllable pneumatic brake system (100) according to Claim 5 or 6, **characterized in that** a pressure medium reservoir filling device (24) interacts with an engine (28) of the vehicle (200) such that filling the parking brake pressure medium reservoir (20C) is prevented once the engine (28) is turned off, wherein at the same time the first and second switching positions (Z1, Z2) of the monostable bypass valve (16) can be set alternately with the engine (28) turned off to reduce the reservoir pressure (pV) in the parking brake pressure medium reservoir (20C) by building up a parking brake braking pressure (pPB) from the parking brake pressure medium reservoir (20C) in the first switching position (Z1) and venting the parking brake braking circuit (C), in particular by means of the bypass vent connection (16c), in the second switching position (Z2).

8. Electronically controllable pneumatic brake system (100), according to Claim 7, **characterized in that** turning off the engine (28) by means of a switch-off signal (S1) or by activation of an immobilizer (29) can be detected.

9. Electronically controllable pneumatic brake system (100) according to any one of the preceding claims, **characterized in that** the monostable bypass valve (16) can be actuated electrically by means of a bypass signal (SU) specified by a parking brake control device (120),
wherein the monostable bypass valve (16) changes into the first, de-energized switching position (Z1) when there is no actuation by means of the bypass signal (SU) and changes into the second, energized switching position (Z2) in the event of actuation by means of the bypass signal (SU).

10. Electronically controllable pneumatic brake system (100) according to Claim 9, **characterized in that** the parking brake control device (120) is embodied to specify the bypass signal (SU) such that the monostable bypass valve (16) can be alternately changed over between the first switching position (Z1) and the second switching position (Z2) to implement graduated braking and to implement a cadence braking function (SF) by varying the parking brake braking pressure (pPB).

11. Electronically controllable pneumatic brake system (100) according to Claim 10, **characterized in that** the bypass signal (SU) can be specified by pulse width modulation.

12. Electronically controllable pneumatic brake system (100) according to any one of Claims 9 through 11, **characterized in that** the bypass signal (SU) can be specified by the parking brake control device (120) depending on a comfort function (K), for example a hill-holder function (K1) or a hill-starting aid (K2), or depending on an automatic parking brake function (X1) or an auxiliary brake function (X2) or a redundancy function (X3) specified by an assistance control device (130).

13. Electronically controllable pneumatic brake system (100) according to Claim 12, **characterized in that** the redundancy function (X3) can be activated in the event of a failure or a defect during the electronic actuation (SA, SB) of the axle modulators (9, 10), wherein as a result the monostable bypass valve (16) can be electrically actuated by means of the bypass signal (SU) specified by the parking brake control device (120) for redundant electropneumatic braking of the vehicle (200) by means of the pneumatic parking brake (105).

14. Electronically controllable pneumatic brake system (100) according to any one of Claims 9 through 13, **characterized in that** the actuation pressure (p15) controlled by means of the parking brake valve (15) can be produced depending on a manual parking brake force (fPBm) specified by manual actuation (F) of the parking brake valve (15) without actuation by the bypass signal (SU) .

15. Electronically controllable pneumatic brake system (100) according to any one of the preceding claims, **characterized in that** a safety valve (22) is disposed between the monostable bypass valve (16) and the bypass vent connection (16c) to implement a safety function (150), by which the specification of the venting pressure (pE) as the bypass control pressure (p16) can be prevented in the event of inadvertent setting of the second switching position (Z2) of the monostable bypass valve (16).

16. Method for electronically controlling a pneumatic brake system (100) according to any one of the preceding claims,
**characterized by** at least the following steps:
- determining whether a long-term switch-off of the vehicle (200) is carried out and whether the parking brake valve (15) is unactuated (St4),
- activating the venting function (140) if the vehicle (200) is turned off for the long term when the parking brake valve (15) is not actuated (St5, St6, St7),
wherein the venting function (130) causes the parking brake pressure medium reservoir (20C) to be emptied so that the reservoir pressure medium (27) from the parking brake pressure medium reservoir (20C) is delivered into the parking brake braking circuit (C) at a reservoir pressure (pV) that is lower than an opening pressure (pO) of the spring-loaded cylinders (3a, 4a), so that the spring-loaded cylinders (3a, 4a) remain applied with the monostable bypass valve (16) in the first switching position (Z1).

17. Method according to Claim 16, **characterized in that** by turning off the engine (28), filling the parking brake pressure medium reservoir (20C) by means of the pressure medium reservoir filling device (24) is prevented if the venting function (130) is activated (St5), so that in the event of subsequent setting of the first switching position (Z1) of the bypass valve (16) the reservoir pressure (pV) is reduced (St6) owing to a rising parking brake control pressure (pC) and a rising parking brake braking pressure (pPB) and in the event of a subsequent setting of the second switching position (Z2) of the bypass valve (16) the parking brake braking circuit (C) is ventilated (St7).

18. Method according to Claim 17, **characterized in that** a switchover of the bypass valve (16) into the second switching position (Z2) is carried out before the parking brake braking pressure (pPB) equals the opening pressure (pO) (St7).

19. Method according to Claim 17 or 18, **characterized in that** the bypass valve (16) is changed over between the first and second switching positions (Z1, Z2) multiple times (St6, St7) until the reservoir pressure (pV) has fallen below the pressure limit (pG) or the opening pressure (pO).

20. Vehicle (200), in particular a utility vehicle (200), with an electronically controlled pneumatic brake system (100) according to any one of Claims 1 through 15.

## Revendications

1. Système de freinage pneumatique (100) commandable électroniquement dans un véhicule (200), notamment véhicule utilitaire (200), comprenant au moins :
des freins de roue (1, 2, 3, 4) destinés à freiner des roues (5, 6, 7, 8) du véhicule (200), les freins de roue (3, 4) d'au moins un essieu de véhicule (HA, VA) possédant des cylindres à accumulateur (3a, 4a) pour former un frein de stationnement (105) pneumatique dans un circuit de freinage de frein de stationnement (C) du véhicule (200),
une vanne de dérivation monostable (16) commandable électroniquement, la vanne de dérivation monostable (16) étant disposée entre une vanne de frein de stationnement (15) actionnable manuellement et les cylindres à accumulateur (3a, 4a) de telle sorte que la vanne de dérivation monostable (16) module une pression de commande de dérivation (p16) en vue de mettre en œuvre une force de frein de stationnement,
**caractérisé en ce que**
la vanne de dérivation monostable (16)
- dans une première position de commutation (Z1), module la pression de commande de dérivation (p16) en fonction d'une pression d'actionnement (p15) générée par la vanne de frein de stationnement (15) en vue de mettre en œuvre une force de frein de stationnement (fPBm) prédéfinie manuellement,
la pression d'actionnement (p15) correspondant au maximum à une pression de réserve (pV) que présente un moyen de pression de réserve (27) dans une réserve de moyen de pression de frein de stationnement (20C) qui alimente le circuit de freinage de frein de stationnement (C), et
- dans une deuxième position de commutation (Z2), module la pression de commande de dérivation (p16) en fonction d'une pression de purge d'air (pE) prédominante dans un raccord de purge d'air de dérivation (16c) en vue de mettre en œuvre une force de frein de stationnement (fPBe) prédéfinie électriquement, une pression de freinage de frein de stationnement (pPB) modulée au niveau des cylindres à accumulateur (3a, 4a) étant réglable en fonction de la pression de commande de dérivation (p16) respective, et
la vanne de dérivation monostable (16) passant automatiquement dans la première position de commutation (Z1) sans une excitation électrique.

2. Système de freinage pneumatique (100) commandable électroniquement selon la revendication 1, **caractérisé en ce qu'**entre la vanne de frein de stationnement (15) actionnable manuellement et les cylindres à accumulateur (3a, 4a) est en plus disposée une vanne relais de frein de stationnement (14) destinée à générer une pression de vanne relais (p14) d'amplification du volume d'air en fonction d'une pression de commande de frein de stationnement (pC) de telle sorte que la vanne de dérivation monostable (16)
- dans la première position de commutation (Z1), module la pression d'actionnement (p15) générée par la vanne de frein de stationnement (15) en tant que pression de commande de dérivation (p16) et l'achemine en tant que pression de commande de frein de stationnement (pC) à une entrée de commande pneumatique (14b) de la vanne relais de frein de stationnement (14), ou module la pression de vanne relais (p14) d'amplification du volume d'air générée par la vanne relais de frein de stationnement (14) sur la base de la pression d'actionnement (p15) en tant que pression de commande de dérivation (p16) et l'achemine en tant que pression de freinage de frein de stationnement (pPB) aux cylindres à accumulateur (3a, 4a) en vue de mettre en œuvre la force de frein de stationnement (fPBm) prédéfinie manuellement, et
- dans une deuxième position de commutation (Z2), module la pression de purge d'air (pE) prédominante dans un raccord de purge d'air de dérivation (16c) en tant que pression de commande de dérivation (p16) et l'achemine en tant que pression de commande de frein de stationnement (pC) à l'entrée de commande pneumatique (14b) de la vanne relais de frein de stationnement (14) en vue de mettre en œuvre la force de frein de stationnement (fPBe) prédéfinie électriquement.

3. Système de freinage pneumatique (100) commandable électroniquement selon la revendication 2, **caractérisé en ce que** la vanne de dérivation monostable (16) est disposée entre la vanne de frein de stationnement (15) et l'entrée de commande pneumatique (14b) de la vanne relais de frein de stationnement (14) pour délivrer la pression d'actionnement (p15) en tant que pression de commande de frein de stationnement (pC) dans la première position de commutation (Z1) et la pression de purge d'air (pE) en tant que pression de commande de frein de stationnement (pC) dans la deuxième position de commutation (Z2).

4. Système de freinage pneumatique (100) commandable électroniquement selon la revendication 2, **caractérisé en ce que** la vanne de dérivation monostable (16) est disposée entre une sortie de pression de freinage pneumatique (14c) de la vanne relais de frein de stationnement (14) et les cylindres à accumulateur (3a, 4a) en vue de délivrer la pression de vanne relais (p14) en tant que pression de freinage de frein de stationnement (pPB) dans la première position de commutation (Z1) et la pression de purge d'air (pE) en tant que pression de freinage de frein de stationnement (pPB) dans la deuxième position de commutation (Z2).

5. Système de freinage pneumatique (100) commandable électroniquement selon l'une des revendications précédentes, **caractérisé en ce que**
- lors de la reconnaissance d'un arrêt prolongé du véhicule (200) et
- lors de la reconnaissance d'une vanne de frein de stationnement (15) non actionnée
une fonction de purge d'air (140) peut être exécutée, la réserve de moyen de pression de frein de stationnement (20C) pouvant être vidée par la fonction de purge d'air (140) en vue de l'arrêt prolongé du véhicule (200) immobilisé même sans excitation électrique de la vanne de dérivation monostable (16).

6. Système de freinage pneumatique (100) commandable électroniquement selon la revendication 5, **caractérisé en ce qu'**une mise à disposition du moyen de pression de réserve (27) pour le circuit de freinage de frein de stationnement (C) avec une pression de réserve (pV) supérieure ou égale à une pression d'ouverture (pO) des cylindres à accumulateur (3a, 4a) peut être empêchée par la fonction de purge d'air (140) en vue de l'application du frein par les cylindres à accumulateur (3a, 4a) dans la première position de commutation (Z1) de la vanne de dérivation monostable (16).

7. Système de freinage pneumatique (100) commandable électroniquement selon la revendication 5 ou 6, **caractérisé en ce qu'**un dispositif de remplissage de réserve de moyen de pression (24) se trouve en liaison fonctionnelle avec un moteur (28) du véhicule (200) de telle sorte qu'un remplissage de la réserve de moyen de pression de frein de stationnement (20C) est empêché dès que le moteur (28) est mis à l'arrêt, la première et la deuxième position de commutation (Z1, Z2) de la vanne de dérivation monostable (16) étant réglables simultanément en alternance lorsque le moteur (28) est arrêté en vue de réduire la pression de réserve (pV) dans la réserve de moyen de pression de frein de stationnement (20C) par établissement d'une pression de freinage de frein de stationnement (pPB) à partir de la réserve de moyen de pression de frein de stationnement (20C) dans la première position de commutation (Z1) et purge de l'air du circuit de freinage de frein de stationnement (C), notamment par le biais du raccord de purge d'air de dérivation (16c) dans la deuxième position de commutation (Z2).

8. Système de freinage pneumatique (100) commandable électroniquement selon la revendication 7, **caractérisé en ce qu'**une mise à l'arrêt du moteur (28) peut être reconnue par le biais d'un signal de mise à l'arrêt (S1) ou par l'activation d'un dispositif antidémarrage (29).

9. Système de freinage pneumatique (100) commandable électroniquement selon l'une des revendications précédentes, **caractérisé en ce que** la vanne de dérivation monostable (16) peut être excitée électriquement par le biais d'un signal de dérivation (SU) prédéfini par un dispositif de commande de frein de stationnement (120),
la vanne de dérivation monostable (16), en l'absence d'une excitation par le biais d'un signal de dérivation (SU), passant dans la première position de commutation (Z1), non alimentée électriquement, et lors d'une excitation par le biais du signal de dérivation (SU), dans la deuxième position de commutation (Z2), alimentée électriquement.

10. Système de freinage pneumatique (100) commandable électroniquement selon la revendication 9, **caractérisé en ce que** le dispositif de commande de frein de stationnement (120) est configuré pour prédéfinir le signal de dérivation (SU) de telle sorte que la vanne de dérivation monostable (16) peut être permutée en alternance entre la première position de commutation (Z1) et la deuxième position de commutation (Z2) en vue de former un freinage graduel et en vue de former une fonction de freinage par pompage (SF) en faisant varier la pression de freinage de frein de stationnement (pPB).

11. Système de freinage pneumatique (100) commandable électroniquement selon la revendication 10, **caractérisé en ce que** le signal de dérivation (SU) peut être prédéfini modulé en largeur d'impulsions.

12. Système de freinage pneumatique (100) commandable électroniquement selon l'une des revendications 9 à 11, **caractérisé en ce que** le signal de dérivation (SU) peut être prédéfini par le dispositif de commande de frein de stationnement (120) en fonction d'une fonction de confort (K), par exemple une fonction anti-recul (K1) ou une aide au démarrage en côte (K2), ou en fonction d'une fonction de frein de stationnement automatique (X1) ou d'une fonction de freinage de secours (X2) ou d'une fonction de redondance (X3) prédéfinie par un dispositif de commande d'assistance (130).

13. Système de freinage pneumatique (100) commandable électroniquement selon la revendication 12, **caractérisé en ce que** la fonction de redondance (X3) peut être activée lors d'une panne ou d'un défaut au niveau de l'excitation électronique (SA, SB) des modulateurs d'essieu (9, 10), la vanne de dérivation monostable (16) étant ainsi excitée électriquement par le biais du signal de dérivation (SU) prédéfini par le dispositif de commande de frein de stationnement (120) en vue du freinage électropneumatique redondant du véhicule (200) par le biais du frein de stationnement (105) pneumatique.

14. Système de freinage pneumatique (100) commandable électroniquement selon l'une des revendications 9 à 13, **caractérisé en ce que** la pression d'actionnement (p15) modulée par le biais de la vanne de frein de stationnement (15), en l'absence d'une excitation par le signal de dérivation (SU), peut être générée en fonction d'une force de frein de stationnement (fPBm) prédéfinie manuellement par un actionnement manuel (F) de la vanne de frein de stationnement (15).

15. Système de freinage pneumatique (100) commandable électroniquement selon l'une des revendications précédentes, **caractérisé en ce qu'**une soupape de sécurité (22) est disposée entre la vanne de dérivation monostable (16) et le raccord de purge d'air de dérivation (16c) en vue de former une fonction de sécurité (150) par laquelle, en cas de réglage involontaire de la deuxième position de commutation (Z2) de la vanne de dérivation monostable (16), la consigne de la pression de purge d'air (pE) en tant que pression de commande de dérivation (p16) peut être évitée.

16. Procédé de commande électronique d'un système de freinage pneumatique (100) selon l'une des revendications précédentes, caractérisé au moins par les étapes suivantes :
- constatation si un arrêt prolongé du véhicule (200) a lieu et si la vanne de frein de stationnement (15) est non actionnée (St4),
- activation de la fonction de purge d'air (140) lorsque le véhicule (200) est mis à l'arrêt prolongé lorsque la vanne de frein de stationnement (15) est non actionnée (St5, St6, St7),
la fonction de purge d'air (130) ayant pour effet que la réserve de moyen de pression de frein de stationnement (20C) est vidée, de sorte que le moyen de pression de réserve (27) est acheminé depuis la réserve de moyen de pression de frein de stationnement (20C) dans le circuit de freinage de frein de stationnement (C) avec une pression de réserve (pV) qui est inférieure à une pression d'ouverture (pO) des cylindres à accumulateur (3a, 4a), de sorte que les cylindres à accumulateur (3a, 4a) restent en application de frein dans la première position de commutation (Z1) de la vanne de dérivation monostable (16) .

17. Procédé selon la revendication 16, **caractérisé en ce qu'**un remplissage de la réserve de moyen de pression de frein de stationnement (20C) par le biais du dispositif de remplissage de réserve de moyen de pression (24) est empêché par une mise à l'arrêt du moteur (28) lorsque la fonction de purge d'air (130) est activée (St5), de sorte que lors d'un réglage qui suit de la première position de commutation (Z1) de la vanne de dérivation monostable (16), la pression de réserve (pV) est réduite (St6) en raison d'une pression de commande de frein de stationnement (pC) qui augmente ainsi que d'une pression de freinage de frein de stationnement (pPB) qui augmente et, lors d'un réglage qui suit de la deuxième position de commutation (Z2) de la vanne de dérivation monostable (16), le circuit de freinage de frein de stationnement (C) est purgé de son air (St7).

18. Procédé selon la revendication 17, **caractérisé en ce qu'**une permutation de la vanne de dérivation monostable (16) dans la deuxième position de commutation (Z2) a lieu avant que la pression de freinage de frein de stationnement (pPB) soit égale (St7) à la pression d'ouverture (pO).

19. Procédé selon la revendication 17 ou 18, **caractérisé en ce qu'**une permutation de la vanne de dérivation monostable (16) entre la première et la deuxième position de commutation (Z1, Z2) (St6, St7) est effectuée plusieurs fois jusqu'à ce que la pression de réserve (pV) soit devenue inférieure à la pression limite (pG) ou à la pression d'ouverture (pO).

20. Véhicule (200), notamment véhicule utilitaire (200), comprenant un système de freinage pneumatique (100) commandable électroniquement selon l'une des revendications 1 à 15.
